(19) Europäisches Patentamt
European Patent Office
Office européen des brevets

(11) EP 3 374 408 B1

(12) # EUROPÄISCHE PATENTSCHRIFT

(45) Veröffentlichungstag und Bekanntmachung des Hinweises auf die Patenterteilung:
**04.12.2019 Patentblatt 2019/49**

(21) Anmeldenummer: **16778826.4**

(22) Anmeldetag: **10.10.2016**

(51) Int Cl.:
***C08F 220/18*** (2006.01) ***C09J 143/04*** (2006.01)

(86) Internationale Anmeldenummer:
**PCT/EP2016/074196**

(87) Internationale Veröffentlichungsnummer:
**WO 2017/080732 (18.05.2017 Gazette 2017/20)**

(54) **KATIONISCH POLYMERISIERBARE POLYACRYLATE ENTHALTEND ALKOXYSILANGRUPPEN UND DEREN VERWENDUNG**

CATIONICALLY POLYMERISABLE POLYACRYLATE CONTAINING ALKOXYSILANE GROUPS AND USE THEREOF

POLYACRYLATES POLYMÉRISABLES PAR VOIE CATIONIQUE CONTENANT DES GROUPES ALCOXYSILANE ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2015 DE 102015222028**

(43) Veröffentlichungstag der Anmeldung:
**19.09.2018 Patentblatt 2018/38**

(73) Patentinhaber: **tesa SE**
**22848 Norderstedt (DE)**

(72) Erfinder:
- **SCHUH, Christian**
**22767 Hamburg (DE)**
- **PRENZEL, Alexander**
**22529 Hamburg (DE)**
- **BAMBERG, Sarah**
**22529 Hamburg (DE)**

(56) Entgegenhaltungen:
**EP-A1- 1 209 177**
**EP-A1- 2 518 087**
**US-A- 3 542 585**
**US-A1- 2012 171 481**
**US-A1- 2014 303 274**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 374 408 B1

## Beschreibung

Die vorliegende Erfindung betrifft eine Zusammensetzung enthaltend einen (Meth)Acrylsäureester, ein olefinisch ungesättigtes Monomer mit zumindest einer kationisch polymerisierbaren funktionellen Gruppe, ein N-Vinyl-substituierten Lactam sowie einen alkoxysilanmodifizierten (Meth)Acrylsäureester. Die Erfindung betrifft ferner ein Verfahren zur Herstellung einer Haftklebemasse aus einer solchen Zusammensetzung, die Haftklebemasse an sich sowie deren Verwendung.

## Stand der Technik

Unter dem Terminus "Strukturklebstoff" wird im Allgemeinen ein hoch belasteter Klebstoff verstanden, der eine mögliche konstruktive Gestaltung mit hoher Festigkeit bzw. Steifigkeit bei weitgehend gleichmäßiger und günstiger Spannungsverteilung gewährleisten soll. Weiterhin charakterisiert dieser Begriff auch die Forderung an eine Klebung, die an sie gestellten mechanischen und durch Alterungsvorgänge bedingten Beanspruchungen dauerhaft ohne Versagen zu erfüllen. Chemisch reagierende Polymersysteme bilden die Basis für Strukturklebstoffe. Die Aushärtereaktion kann durch Zufuhr von Wärme, Vermischen von Harz und Härter, Luftfeuchtigkeit oder UV-Strahlung erfolgen.

Bei den chemisch reagierenden Systemen bewirken in der Regel zwei miteinander gemischte Reaktionspartner die Klebschichtbildung (Zweikomponenten-Reaktionsklebstoffe oder ein Reaktionspartner findet die zweite für die Reaktion erforderliche "Komponente" in den chemischen Bedingungen der Klebefuge (z.B. Feuchtigkeit) vor bzw. wird diese Komponente durch einen äußeren Stimulus wie beispielsweise durch thermische Energie oder UV-Strahlung freigesetzt (Einkomponenten-Reaktionsklebstoffe). Diese Systeme sind meist flüssig, um leichter appliziert werden zu können und damit die Aushärtereaktion aufgrund besserer Diffusion der Reaktivkomponenten schnell und mit hohen Umsätzen stattfinden kann. Dies birgt aber den Nachteil, dass die Fügeteile bis zum Abbinden fixiert werden müssen. Hierbei kann es aufgrund des notwendigen Anpressdrucks beim Fixieren dazu kommen, dass der Klebstoff an den Rändern der Verklebung herausgepresst wird.

Haftklebstoffe (PSA = "pressure sensitive adhesive") wiederum werden in einer Vielzahl von Anwendungen eingesetzt, da sie viele erwünschte charakteristische Merkmale bieten, wie zum Beispiel die Entfernbarkeit und die leichte Anwendung. Für eine dauerhaftere und eine sehr glatte Klebung haben konventionelle PSAs häufig nicht die erforderliche Festigkeit, um ihre Haftung auf speziellen Substraten aufrechtzuerhalten. Ferner ist möglicherweise ein konventioneller PSA beim Auftragen auf bestimmte Materialien nicht in der Lage, der Einwirkung von erhöhten Temperaturen oder hoher Feuchtigkeit zu widerstehen. Die Anwendung eines PSA zum Beispiel auf Polymethylmethacrylat- und Polycarbonattafeln, die bekanntermaßen "Materialien ausgasen" und schwierig zu kleben sind, kann zu Blasenbildung und Delaminierung führen.

Strukturelle Haftklebstoffe hingegen besitzen typischerweise neben den üblichen Polymeren, welche in Haftklebstoffen eingesetzt werden, noch thermisch vernetzende Komponenten, wodurch sehr hohe Schälwiderstände erreicht werden, die Größenordnungen wie ein struktureller Kleber erreichen können.

Härtbare Klebstoffe (z.B. wärme- oder lichtgehärtete) werden in Anwendungen eingesetzt, bei denen Substrate eine erhebliche Beständigkeit und hochfeste Haftung erfordern. Konventionelle härtbare Klebstoffe werden jedoch normalerweise nicht als PSA und auch nicht in einer Form bereitgestellt, die leicht anzuwenden ist, wie zum Beispiel als Band. Für optische Produktanwendungen (z.B. Verglasungen) sind härtbare Klebstoffe wünschenswert, da sie für optisch klare, stark haftende Laminate (z.B. geschichtete Substrate) sorgen.

Um sowohl Festigkeit und leichte Anwendbarkeit zu erreichen, sind hybride Zusammensetzungen entwickelt worden.

Konventionelle härtbare Klebstoffe enthalten reaktive chemische Grundbausteine wie beispielsweise Epoxidklebstoffe, die Epoxidgruppen enthalten. Bei der Härtung können sich diese Grundbausteine mit Hilfe eines Härters über die Epoxidgruppen miteinander verbinden und ein stabiles, dreidimensionales Netzwerk ausbilden. Diese Netzwerkbildung ist eine wesentliche Ursache für die allgemein hohen Festigkeiten und guten Klebeigenschaften von Epoxidklebstoffen auf vielen Materialien.

Hybride Zusammensetzungen zeichnen sich durch das Einbinden weiterer Materialien in diese Netzwerkstruktur aus. Lösungsansätze sind vor allem die Herstellung von Interpenetrierenden Netzwerken (IPN oder auch Durchdringungsnetzwerk) oder anderen mehrphasigen Strukturen. Unter einem semi-interpenetrierenden Netzwerk wird die Kombination eines linearen unvernetzten Polymers und eines ersten vernetzten Polymers verstanden, wobei das erste vernetzte Polymer in Gegenwart des anderen synthetisiert ist. Das unvernetzte Polymer durchdringt das Netzwerk des vernetzten Polymers und bewirkt, dass die beiden Komponenten infolge von Verhakungen und Verschlaufungen physikalisch kaum trennbar sind. Dieses semi-interpenetrierende Netzwerk ermöglicht die Eigenschaftskombination zweier Polymere, selbst wenn sie thermodynamisch unverträglich sind.

Solche Netzwerke mit gegenseitiger Durchdringung können sequentiell (aus Polymer A und Monomer B) oder simultan (aus Monomer A und Monomer B) hergestellt werden. Vorzugsweise werden ein Elastomer und ein glasartiges

Polymer, z. B. ein Polyurethan und ein Polyacrylat, kombiniert. Je nach den Mengenverhältnissen entsteht ein verstärktes Elastomer oder ein Harz von hoher Schlagzähigkeit.

IPN-Systeme können chemisch sehr verschieden zusammengesetzt sein. Für ihre Synthese gibt es im Wesentlichen zwei Techniken:

Die simultane Technik besteht darin, zwei lineare Polymere, Präpolymere oder Monomere der Sorten A und B mit den jeweiligen Vernetzungsagentien im flüssigen Zustand, also in Masse, Schmelze, Lösung oder Dispersion, zusammenzugeben und simultan zu polymerisieren bzw. zu vernetzen. Dabei müssen Substanzen ausgewählt werden, die nicht miteinander reagieren.

Die sequenzielle Technik besteht darin, ein vernetztes Polymer A mit einem Monomer der Sorte B zu quellen und letzteres dann in situ unter Zugabe von Vernetzungsagentien zu polymerisieren bzw. zu vernetztten.

IPN-Systeme sind Beispiele für Polymermischungen, bei denen eine makroskopische Phasentrennung nicht in Erscheinung tritt. Normalerweise führt das Mischen von Polymeren zu mehrphasigen Systemen, was auf die wohlbekannte thermodynamische Unverträglichkeit der meisten Polymeren zurückzuführen ist. Diese Inkompatibilität resultiert aus dem relativ niedrigen Entropiegewinn beim Mischen von Polymeren, der seinerseits darauf beruht, dass die große Länge der Ketten ihre Möglichkeiten zur Berührung einschränkt. Werden jedoch Produkte mit niedrigerem Molekulargewicht gemischt und anschließend simultan polymerisiert und vernetzt, so kann eine kinetische Kontrolle der Phasentrennung erreicht werden.

Gegenüber gewöhnlichen Polymerblends zeichnen sich interpenetrierende Netzwerke durch bessere Beständigkeit gegenüber Entmischung und oft vorteilhafte mechanische Eigenschaften aus. Die Abbaubeständigkeit der interpenetrierenden Netzwerke ist gewöhnlich besser als die von Copolymeren, in denen die unverträglichen Polymere als Blöcke kovalent miteinander verbunden sind. Daher werden IPNs auch im Bereich der Klebstoffe eingesetzt.

Bekannt sind Epoxidharzklebstoffe, die zusätzlich eine weitere Art von Grundbausteinen enthalten, die über einen zweiten chemischen Mechanismus ein eigenständiges Netzwerk ausbilden und nicht mit den epoxidhaltigen Bausteinen reagieren können. Bei der Härtung dieser Klebstoffe entstehen deshalb zwei voneinander unabhängige Klebstoffnetzwerke, die sich gegenseitig durchdringen, also IPNs. Praktisch gesehen bestehen solche Systeme aus zwei Klebstoffen in einem System, deren Eigenschaften sich im Idealfall synergistisch ergänzen.

Epoxidharze sind im Allgemeinen nur schlecht mit anderen Polymeren mischbar. Wird die Mischung trotzdem versucht, so neigen Polymere in der Regel zur Trennung der eingesetzten Phasen. Wenn es jedoch gelingt, bereits die unvernetzten bzw. nicht polymerisierten Grundbausteine der Polymere zu vermischen und anschließend ihre Polymerisation so zu führen, dass die Phasentrennung der gebildeten Polymere verhindert wird, dann können im resultierenden Polymergemisch Synergieeffekte beobachtet werden. Für Eigenschaften wie die Klebfestigkeit oder Schlagzähigkeit ergeben sich oft deutlich höhere Werte als für die getrennt untersuchten Einzelnetzwerke (z.B. reine Epoxidklebstoffe).

Der Effekt der Technologie der IPN-Modifizierung von Klebstoffen besteht daher in der Nutzung von Synergieeffekten, die sich nur in der Kombination zweier Netzwerke zeigen, aber nicht in den Einzelnetzwerken zu beobachten sind. Daraus resultierten häufig eine Maximierung von gewünschten Eigenschaften und eine mögliche Minimierung unerwünschter Eigenschaften.

IPNs sind auch aus dem Bereich der Haftklebemassen sowie der strukturellen Haftklebemassen bekannt.

EP 0 621 931 B1 beschreibt Hybridklebstoffe, die aus einem Acrylatsirup - nämlich einer Lösung aus Polyacrylaten, erhalten durch mit einem geringen Umsatz durchgeführten Polymariation, in den restlichen Acrylatmonomeren - und Epoxidmonomeren hergestellt werden, und somit ein simultanes IPN ausbilden. Ein Haftklebstoff kann nur erhalten werden, wenn die Reaktion zum Halten kommt, bevor die vollständige Aushärtung erfolgt ist (B-Zustand). In diesem Zustand muss der Haftklebefilm in der Regel gekühlt gelagert werden, was von Nachteil ist.

WO 2004/060946 beschreibt eine Klebstoffzusammensetzung, die ein Acrylatcopolymer, acrylierte Oligomere und einen Initiator, der eine radikalische Polymerisation startet, umfasst. Es bildet sich ein Semi-IPN, welches zu einer hochtransparenten Klebemasse führt, was durch die Kombination von Acrylatcopolymeren mit Acrylatoligomeren erreicht wird. Nachteilig ist, dass diese Formulierungen rein auf Acrylaten basieren, welche teilweise nicht genügend hohe Verklebungsfestigkeiten gewährleisten sowie die Gegebenheit, dass hierbei ähnliche Stoffklassen miteinander kombiniert werden, so dass die Bandbreite der erreichbaren synergistischen Effekte geringer ist als bei unterschiedlichen Stoffklassen.

In der WO 2012/061032 werden Klebemassen offenbart, in denen ein reaktives Isocyanat-Prepolymer in einem Styrolblockcopolymer-Haftkleber dispergiert wurde und dieses Prepolymer nach der Vernetzung mittels Luftfeuchte ein Semi-IPN innerhalb der Haftklebemassephase bildet. Diese Haftklebemassen haben den Nachteil, dass sie von Feuchtigkeit abgeschlossen gelagert werden müssen.

EP 1 658 319 B1 beschreibt eine Formmasse, enthaltend ein Gemisch interpenetrierender Polymere mit einer ersten Phase eines vernetzten Isobutenpolymers und einer zweiten Phase eines versteifenden Polymers, das (Meth)acryl- und/oder Vinylaromateneinheiten umfasst, wobei die erste Phase das Reaktionsprodukt eines Isobutenpolymers mit durchschnittlich wenigstens 1,4-funktionellen Gruppen im Molekül und eines Vernetzungsmittels mit durchschnittlich wenigstens zwei funktionellen Gruppen im Molekül, die komplementär funktionell zu den funktionellen Gruppen

des Isobutenpolymers sind, umfasst. Das IPN kann dabei simultan oder sequentiell - mit der vernetzten Isobutenphase als vorgelegtem Netzwerk- hergestellt werden. Durch die Vernetzung des PIB werden in den Beispielen keine haftklebrigen Formmassen offenbart.

Um die Verträglichkeit der ersten Phase mit der zweiten Phase zu verbessern, wird die die Mitverwendung von polymeren Kompatibilisierungsmitteln vorgeschlagen, z.B. Polyethylenglycole. Die polymeren Kompatibilisierungsmittel sind vorzugsweise vernetzt. Das polymere Kompatibilisierungsmittel kann auf diese Weise ein die erste Phase penetrierendes Netzwerk bilden. Nachteilig an dieser Art der Kompatibilisierung ist die hohe Komplexität des nun ternären Systems, was die Steuerung der Eigenschaften erschwert.

In EP 2 160 443 B1 wird ein semi-interpenetrierendes Netzwerk mit einer ersten Phase eines linearen unvernetzten Isobutenpolymers und einer zweiten Phase eines vernetzten Polymers offenbart, wobei das vernetzte Polymer durch vernetzende Aufbaureaktion in Gegenwart des Isobutenpolymers erhalten ist, offenbart. In der bevorzugten und mit Beispielen belegten Ausführung wird das vernetzte Polymer durch radikalische Polymerisation ethylenisch ungesättigter Monomere, insbesondere von Styrol und Methacrylaten, erhalten. Jedoch zeigt sich, dass solche Systeme bei Temperaturen ab 80°C deutlich an Festigkeit verlieren.

Eine gängige Methode zur Schlagzähmodifizierung von hochfesten Reaktivklebstoffen ist die Erzeugung einer zweiphasigen Polymermorphologie mit einer mikroheterodispersen Phase eines thermoplastischen oder elastomeren Polymers mit niedriger Glasübergangstemperatur unter -20°C in einer kontinuierlichen Matrix eines Polymers mit einer hohen Glasübergangstemperatur über 100°C. Es liegen hierbei im Allgemeinen diskrete sphärische Weichphasendomänen mit Durchmessern zwischen 0,1 und 10 $\mu$m homogen in der Matrix verteilt vor.

Ein gängiges Verfahren zur Erzeugung solcher zweiphasigen Morphologien z. B. in Epoxidharzklebstoffen ist der Zusatz eines endgruppenmodifizierten, epoxidreaktiven Polybutadien-Co-Acrylnitril-Copolymers zum ungehärteten Epoxidharz. Dabei muss das thermoplastische Polymer im ungehärteten Epoxidharz löslich werden, im Verlauf der Härtungsreaktion jedoch mit dem Epoxidharz-Polymer unverträglich sein, so dass es während der Härtung zur Phasenseparation kommt. Mit Erreichen des Gelpunktes wird der Phasenseparationsprozess gestoppt, so dass das thermoplastische bzw. elastomere Polymer in Form von mikroskopischen sphärischen Domänen in der Epoxidharzmatrix vorliegt.

In EP 1 456 321 B1 wird ein multiphasiger Reaktivklebstoff vorgeschlagen, bei dem die Bindemittelmatrix des gehärteten Reaktionsklebstoffs eine kontinuierliche Phase bestehend aus einem ggf. vernetzten Polymer (P1) mit einer Glasübergangstemperatur oberhalb von 100°C, vorzugsweise oberhalb von 120°C, aufweist, in der eine heterodisperse Phase bestehend aus einzelnen kontinuierlichen Bereichen eines thermoplastischen oder elastomeren Polymers P2 mit einer Glasübergangstemperatur von weniger als -30°C dispergiert ist. Innerhalb dieser Phase, gebildet durch P2, ist ein weiteres thermoplastisches oder elastomeres Polymer P3 mit einer Glasübergangstemperatur von weniger als -30°C eindispergiert. Weiterhin ist in der kontinuierlichen Phase P1 eine weitere heterodisperse Phase aus Bereichen des thermoplastischen oder elastomeren Polymers P3 mit einer Glasübergangstemperatur von weniger als -30°C dispergiert, wobei P3 nicht identisch ist mit P2. Die kontinuierliche Phase P1 ist bevorzugt ein Epoxidharz. Es werden keine Haftklebemassen beschrieben.

In DE 10 2004 031 188 A1 und DE 103 615 40 A1 werden Klebemassen, die zumindest aus a) einem säure- oder säureanhydridmodifizierten Vinylaromatenblockcopolymer und b) einer epoxidhaltigen Verbindung bestehen, offenbart. Durch die chemische Vernetzung der Harze mit den Elastomeren werden sehr große Festigkeiten innerhalb des Klebefilms erreicht. Um die Adhäsion zu erhöhen, ist auch der Zusatz von mit dem Elastomerblock der Blockcopolymere verträglichen Klebharzen möglich. Im Wesentlichen wirkt so das Epoxidharz als Vernetzungsagens für die modifizierten Elastomere und bildet allenfalls in geringem Maße eine eigene zweite Phase aus, wodurch diese Systeme weiterhin die generelle Schwäche von Vinylaromatenblockcopolymer-PSAs, nämlich eine geringe Wärmescherfestigkeit, aufzeigen.

Die WO 2012/177 337 A1 beschreibt einen UV-vernetzbaren, Epoxide enthaltenden Acrylat-Sirup. Nach der Herstellung des Prepolymers - dem Sirup - mittels UV-aktivierter radikalischer Polymerisation wird dieses mit einem kationischen Photoinitiator und zusätzlich zu den restlichen radikalisch polymerisierbaren Monomeren noch mit Epoxymonomeren gemischt. Der Sirup wird beschichtet und anschließend auf der Bahn radikalisch und kationisch zu Ende polymerisiert und gleichzeitig vernetzt. Dieses Verfahren sowie das dadurch resultierende Produkt eignet sich nicht zu einer nachträglichen kationischen Vernetzung, oder es müssen jeweils der radikalische und der kationische Photoinitiator aufeinander abgestimmt werden, sodass beide durch einen komplett anderen Wellenlängenbereich aktiviert werden. Die Auswahl kommerziell verfügbarer Initiatoren ist jedoch sehr gering. Ein weiterer Nachteil sind zusätzlich die zwar nur als optional beschriebenen, aber in jedem Beispiel der Schrift verwendeten säurefunktionalisierten ethylenischen Monomere im Acrylat, da hierdurch die Gefahr der thermischen Initiierung der kationische Polymerisation besteht und die Produkte somit nicht lagerstabil sind.

US 2014/0303274 beschreibt weitere UV-vernetzbare, Epoxide enthaltenden acrylische Haftklebemassen.

Ein weiteres Problem bei den vorgenannten Zusammensetzungen besteht darin, dass diese zwar auf trockenen Substraten in der Regel eine gute Haftung besitzen, jedoch auf feuchten Oberflächen keine zufriedenstellende Haftung

erzielt wird. Dies gilt sowohl für eine Verklebung auf feuchten Oberflächen als auch für die Haltbarkeit der Verklebung, wenn das verklebte Bauteil über einen längeren Zeitraum einer feuchten Umgebung ausgesetzt ist. Um diesem Problem entgegenzutreten, wird in WO 2013/103334 A1 ein System vorgeschlagen, bei dem Epoxy-modifizierte Acrylate mit Epoxy-modifizierten Silanen zur Steigerung der Adhäsion im vernetzten Zustand eingesetzt werden. Durch ein solches System kann zwar die Haftung auf feuchten Oberflächen verbessert werden, jedoch führt die Zugabe der niedermolekularen Silane zu einer Reduktion der Kohäsion im unvernetzten Zustand, was als nachteilig empfunden werden kann.

Des Weiteren wird in der Literatur vorgeschlagen, oligomere Alkoxy-Silane einzusetzen, um die Haftung auf feuchten Oberflächen zu erhöhen. Derartige Systeme sind beispielsweise in US 6140445 A, WO 2001/053385 A1, WO 2013/096272 A1 und EP 1 394 199 B1 beschreiben. Die hier beschriebenen oligomeren Alkoxy-Silane sind allerdings unter Normalbedingungen flüssig und haben zudem auch Weichmacher-Eigenschaften, was beides für die Erzeugung struktureller Haftklebemassen nachteilig sein kann.

**Aufgabe der Erfindung**

Die Aufgabe der Erfindung bestand somit darin, eine Zusammensetzung zur Erzeugung einer strukturellen Haftklebemasse zur Verfügung zu stellen, die aufgrund der ausbalancierten adhäsiven und kohäsiven Eigenschaften zur Vorfixierung unterschiedlicher Fügeteile geeignet ist, wobei es nicht zu Ausquetschungen kommt, die die Fügeteile verschmutzen oder zu optischen Defekten führen können. Gleichzeitig soll die strukturelle Haftklebemasse gute Verklebungseigenschaften auf feuchten Substraten besitzen, speziell auf fechten Glassubstraten. Die strukturelle Haftklebemasse soll durch aktinische Strahlung aushärtbar sein, sodass Verklebungsfestigkeiten in einer ähnlichen Größenordnung wie bei strukturellen Klebern erreicht werden.

**Lösung der Aufgabe**

Die Aufgabe wird gelöst durch eine Zusammensetzung enthaltend oder bestehend aus:

(a1) 35 bis 90 Gew.-% wenigstens eines (Meth)Acrylsäureesters der allgemeinen Formel (I)

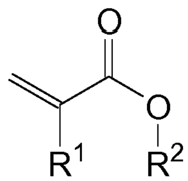
(I),

in der $R^1$ ausgewählt ist aus H und $CH_3$ und $R^2$ eine lineare oder verzweigte Alkylkette mit 1 bis 30 C-Atomen darstellt;
(a2) 5 bis 30 Gew.-% wenigstens eines olefinisch ungesättigten Monomeren mit zumindest einer kationisch polymerisierbaren funktionellen Gruppe;
(a3) 5 bis 30 Gew.-% wenigstens eines alkoxysilanmodifizierten (Meth)Acrylsäureesters;
(a4) 5 bis 30 Gew.-% wenigstens eines N-Vinyl-substituierten Lactams und
(a5) optional bis 5 Gew.-% zumindest eines von (a1) verschiedenen (Meth)Acrylsäureesters und/oder wenigstens eines olefinisch ungesättigten Monomeren, das mit den Komponenten (a1) bis (a4) copolymerisierbar ist.

Die Gewichtsangaben beziehen sich jeweils auf die Zusammensetzung. Die Erfindung betrifft ferner eine Haftklebemasse sowie eine strukturelle Haftklebemasse, die durch Polymerisation der Komponenten der erfindungsgemäßen Zusammensetzung erhältlich sind.

Der vorliegenden Erfindung liegt die Erkenntnis zugrunde, dass durch die Kombination der Komponente (a2) mit dem Alkoxysilan-modifizierten (Meth)acrylsäure-Ester der Komponente (a3) bei hieraus erzeugten Haftklebemassen und strukturellen Haftklebemassen eine Verbesserung der Adhäsion auf feuchten Oberflächen erzielt wird, ohne dass hierbei die aus dem Stand der Technik bekannten Nachteile hinsichtlich der Kohäsion im unvernetzten Zustand auftreten. Dieser Vorteil ist besonders ausgeprägt, wenn die Komponente (a2) Epoxid- und / oder Oxetangruppen enthält, insbesondere eine 3,4-Epoxycyclohexylgruppe.

Im Folgenden werden unter dem Begriff "kationisch polymerisierbar funktionelle Gruppen oder Monomere" alle Epoxid- (Oxiran-) und/oder Oxetangruppen oder mindestens eine dieser funktionellen Gruppen umfassenden Moleküle verstanden, insbesondere 3,4-Epoxycyclohexylgruppen.

Als Polyacrylat wird im Folgenden ein Polymer umfassend Monomere aus der Reihe der Acryl- und/oder Methacrylsäureester verstanden. Dabei wird unter dem Begriff "(Meth)Acrylsäureester im Sinne der vorliegenden Erfindung

eine Verbindung der Formel (I) verstanden, bei der $R^1$ ein Wasserstoffatom und/ oder eine Methylgruppe ist.

Als chemische Verknüpfung bzw. Vernetzung der beiden Polymernetzwerke wird im Rahmen dieser Schrift eine solche Reaktion zwischen Polymer-Makromolekülen verstanden, bei der zwischen diesen Makromolekülen zusätzlich zu den schon bestehenden ein weiteres dreidimensionales Netzwerk ausgebildet wird. Im erfindungsgemäßen Sinne wird dies durch den Einsatz aktinischer (energiereicher) Strahlung, wie etwa ultravioletter Strahlen, Elektronenstrahlen oder radioaktiver Strahlen erzielt. Die Initiierung der Vernetzung durch thermische Energie ist unerwünscht, da ansonsten die Lagerstabilität der erfindungsgemäßen strukturellen Haftklebemassen nicht gewährleistet ist, jedoch kann nach der Aktivierung der kationischen Polymerisation durch aktinische Strahlung, was gleichzeitig auch zur Vernetzung der Epoxymatrix mit dem kationisch polymerisierbare Gruppen enthaltenden Polyacrylat führt, die thermische Energie zur Erhöhung der Effizienz der Vernetzungsreaktion und der Polymerisation genutzt werden. Weiterhin kann zusätzlich noch durch mechanische Beeinflussung (wie etwa Ultraschall) oder durch exotherme Reaktionsabläufe im Reaktionssystem eine Erhöhung der Effizienz erzielt werden.

Bei der vorliegenden Erfindung wird vorzugsweise ein UV-aktivierbarer Photoinitiator verwendet. Solche Verbindungen setzen nach Aktivierung über energiereiche Strahlung ein Proton frei, wodurch die kationisch Vernetzungsreaktion ausgelöst wird. Die Aktivierung mittels aktinischer Strahlung, insbesondere mit Hilfe von UV-Strahlung, kann vor oder nach dem Applizieren auf den Fügeteilen erfolgen. Bei UV-transparenten Substraten kann die Aktivierung auch nach Applikation in der Klebefuge erfolgen.

Als strukturelle Haftklebemassenformulierungen werden erfindungsgemäß Mischungen und Zusammensetzungen verstanden, die zumindest vernetzbare (unvernetzte und/oder teilvernetzte, weiter vernetzbare) haftklebrige Polyacrylate, ggf. weitere Polymere und kationische polymerisierbare Monomere enthalten, wobei nach einer Polymerisation und der gleichzeitig ablaufenden Vernetzung dieser Zubereitungen vernetzte Polymersysteme vorliegen, die als strukturelle Haftklebmassen geeignet sind.

Unter einer Haftklebemasse wird in dieser Schrift wie im allgemeinen Sprachgebrauch üblich ein Stoff verstanden, der - insbesondere bei Raumtemperatur - dauerhaft klebrig sowie klebfähig ist (im Rahmen dieser Schrift als "haftklebrig" oder auch als "selbstklebrig" bezeichnet). Charakteristisch für eine Haftklebemasse ist, dass sie durch Druck auf ein Substrat aufgebracht werden kann und dort haften bleibt. Abhängig von der genauen Art des Haftklebstoffs, der Temperatur und der Luftfeuchtigkeit sowie des Substrats kann die Einwirkung eines kurzfristigen, minimalen Drucks hinreichend sein, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein. Haftklebstoffe haben besondere, charakteristische viskoelastische Eigenschaften, die zu der dauerhaften Klebrigkeit und Klebfähigkeit führen. Kennzeichnend für sie ist, dass es, wenn sie mechanisch deformiert werden, sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Haftklebstoffes als auch von der Geschwindigkeit und Dauer der Deformation sowie von der Temperatur.

Der nach der Aushärtung erhaltende strukturelle Haftklebstoff hingegen erreicht sehr hohe Schälwiderstände, die Größenordnungen wie ein struktureller Kleber aufzeigen können.

Vor der Aushärtung kann die erfindungsgemäße strukturelle Haftklebemasse wie eine konventionelle Haftklebemasse in der Form eines ein- oder doppelseitigen Klebebandes, einer Klebebandrolle, eines Transferklebebandes, eines Stanzlings und weiteren dem Fachmann geläufigen Ausführungsformen appliziert werden. Die Haftklebemasse kann wahlweise auch mit einem Träger versehen werden, beispielsweise einer Kunststoff- oder Metallfolie. Diese ist bei doppelseitigen klebrigen Ausführungsformen innenliegend angeordnet. Die Erfindung betrifft auch Ausführungsformen, bei denen die erfindungsgemäße Haftklebemasse nur auf einer Seite des Trägers angeordnet ist, wobei die gegenüberliegende Flachseite des Trägers mit einem anderen Klebstoff beschichtet sein kann. Hierfür kommen sämtliche, dem Fachmann an sich bekannte Klebstoffe in Frage.

Die erfindungsgemäße strukturelle Haftklebemasse ist aufgrund der ausbalancierten adhäsiven und kohäsiven Eigenschaften zur Vorfixierung unterschiedlicher Fügeteile geeignet. Beim Zusammenfügen kommt es deshalb nicht zu Ausquetschungen, die die Fügeteile verschmutzen oder zu optischen Defekten führen können.

Die erfindungsgemäßen Haftklebemassen und strukturellen Haftklebemassen zeichnen sich zudem durch eine gute Haftung auf feuchten Substraten aus. Dies ist von Vorteil, da in großtechnischen Fertigungsprozessen, wie beispielsweise bei der Automobilherstellung, die zu verklebenden Bauteile zum Teil in Außenbereichen oder nicht beheizten Lagerhallen gelagert werden. Diese Bauteile werden in der Regel sofort nach der Zuführung zum Produktionsprozess ohne vorherige Konditionierung verklebt. Dabei kann es zur Ausbildung eines Feuchtigkeitsfilms auf der Oberfläche kommen, der die Verklebung mit bislang bekannten Klebemassen beeinträchtigen könnte. Dies kann zu Qualitätsschwankungen bei der Verklebung führen. Die in den erfindungsgemäßen Zusammensetzungen enthaltene Komponente (a3) wirkt dabei als ein in das Polymer der Haftklebemasse eingebauter Feuchtigkeitsfänger, sodass auch auf feuchten Substraten gute Klebeergebnisse erzielt werden. Zudem wirken die Silangruppen der Komponente (a3) wie ein integrierter Haftvermittler bei der Verklebung, speziell auf Glassubstraten.

Die Haftklebemasse kann so ausgestaltet sein, dass sie durch aktinische Strahlung ausgehärtet werden kann. Damit werden Verklebungsfestigkeiten in einer ähnlichen Größenordnung wie bei strukturellen Klebern erreicht. Weiterhin betrifft die Erfindung auch die Herstellung und Produkte enthaltend die erfindungsgemäßen Haftklebemassen und strukturellen Haftklebemassen sowie deren Anwendung.

Detaillierte Beschreibung der Erfindung

Die vorliegende Erfindung beschreibt eine Zusammensetzung zur Erzeugung einer Haftklebemasse oder strukturellen Haftklebemasse, umfassend eine Epoxy-funktionalisierte Acrylatmatrix, kationisch polymerisierbare Epoxymonomere sowie gewünschtenfalls einen eine Brønsted- oder Lewis-Säure freisetzenden Photoinitiator. Die strukturelle Haftklebemasse zeigt überraschenderweise durch die gleichzeitig stattfindende Vernetzung über die Epoxygruppen der Polyacrylatmatrix eine Synergie zwischen der Acrylat- und der Epoxidmatrix. Dies äußert sich darin, dass die strukturelle Haftklebmasse vor der Belichtung mit UV- oder anderer aktinischer Strahlung die haftklebrigen Eigenschaften des Polyacrylats und nach Bestrahlung die strukturelle Festigkeit eines Epoxidklebers aufweist. Durch die einpolymerisierten Silangruppen, die als Wasserfänger bei Kontakt mit Feuchtigkeit fungieren, zeigen die erfindungsgemäßen Haftklebemassen und strukturellen Haftklebemassen eine gute Haftung auf feuchten Oberflächen. Da insofern die Silangruppen nicht monomer oder oligomer in Form einer zugemischten Flüssigkeit vorliegen, wird die Kohäsion der Haftklebemasse praktisch nicht beeinträchtigt.

Ein weiterer Vorteil der kationischen Polymerisation sowie der gleichzeitig stattfindenden Vernetzungsreaktion ist, dass die Reaktion nach Initiierung auch in Abwesenheit von Licht und somit direkt in der Fügestelle weiter reagieren kann und im Gegensatz zu einem radikalischen Mechanismus hierdurch auch die Aushärtung von Schichtdicken bis zu 1 mm möglich ist.

Polyacrylatmatrix

Die erfindungsgemäße Zusammensetzung zur Erzeugung der Haftklebemassen und strukturellen Haftklebemassen ist, enthält oder besteht erfindungsgemäß aus

(a1) 35 bis 90 Gew.-% wenigstens eines (Meth)Acrylsäureesters der allgemeinen Formel (I),
(a2) 5 bis 30 Gew.-% wenigstens eines olefinisch ungesättigten Monomeren mit zumindest einer kationisch polymerisierbaren funktionellen Gruppe;
(a3) 5 bis 30 Gew.-% wenigstens eines alkoxysilanmodifizierten (Meth)Acrylsäureesters;
(a4) 5 bis 30 Gew.-% wenigstens eines N-Vinyl-substituierten Lactams und
(a5) optional bis 5 Gew.-% zumindest eines von (a1) verschiedener (Meth)Acrylsäureesters und/oder wenigstens eines olefinisch ungesättigten

Monomeren, das mit den Komponenten (a1) bis (a4) copolymerisierbar ist, wobei sich die Angaben jeweils auf die Zusammensetzung beziehen.

Die erfindungsgemäße Zusammensetzung ist besonders vorteilhaft, weil sich hieraus erzeugte Haftklebemassen und strukturelle Haftklebemassen durch eine verbesserte Adhäsion auszeichnen.

In einerweiteren bevorzugten Variante dererfindungsgemäßen Zusammensetzung enthält oder besteht diese unabhängig voneinander aus

45 bis 80 Gew.-%, insbesondere 45 bis 70 Gew.-% an Komponente (a1),
10 bis 25 Gew.-%, insbesondere 15 bis 25 Gew.-% an Komponente (a2),
10 bis 25 Gew.-%, insbesondere 15 bis 25 Gew.-% an Komponente (a3),
10 bis 25 Gew.-%, insbesondere 15 bis 25 Gew.-% an Komponente (a4).

Die Gewichtsangaben beziehen sich jeweils auf die Zusammensetzung. Mit anderen Worten können die vorgenannten Bereiche beliebig miteinander kombiniert werden.

Vorzugsweise werden für die Monomere (a1) Acrylmomonere, umfassend Acryl- und Methacrylsäureester mit Alkylgruppen, bestehend aus 1 bis 14 C-Atomen, eingesetzt. Spezifische Beispiele, ohne sich durch diese Aufzählung einschränken zu wollen, sind Methyl(meth)acrylat, Ethyl(meth)acrylat, Propyl(meth)acrylat, n-Butyl(meth)acrylat, n-Pentyl(meth)acrylat, n-Hexyl(meth)acrylat, n-Heptylacrylat, n-Octylacrylat, n-Nonylacrylat, Laurylacrylat, Stearyl(meth)acrylat, Behenylacrylat, und deren verzweigte Isomere, wie z.B. 2-Ethylhexylacrylat, 2-Propylhexylacrylat. Weitere einzusetzende Verbindungsklassen, die ebenfalls in geringen Mengen unter (a1) hinzugesetzt werden können, sind Cyclohexyl(meth)acrylat und Isobornyl(meth)acrylat.

Vorzugsweise werden für die Monomere (a2) Monomere der Formel (II) verwendet

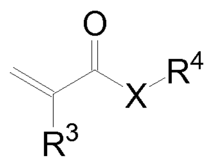

(II),

wobei $R^3$ H oder -$CH_3$, X -$NR^5$- oder -O- , $R^5$ H oder -$CH_3$ und $R^4$ eine Epoxy-funktionalisierte (Hetero)hydrocarbylgruppe darstellen.

Weiter bevorzugt umfasst die Gruppe $R^4$ lineare, verzweigte, cyclische oder polycyclische Kohlenwasserstoffe mit 2 bis 30 Kohlenstoffatomen, welche mit einer Epoxygruppe funktionalisiert sind. Besonders bevorzugt umfasst die Gruppe $R^4$ 3 bis 10 Kohlenstoffatome, wie beispielsweise Glycidyl(meth)acrylat. Noch besonders bevorzugter sind 3,4-Epoxycyclohexyl-substitituierte Monomere wie beispielsweise 3,4-Epoxycyclohexylmethyl-(meth)acrylat.

In bevorzugter Ausgestaltung der erfindungsgemäßen Zusammnensetzung ist die Komponente (a3) ausgewählt aus 3-(Triethoxysilyl)propylmethacrylat (CAS: 21142-29-0), 3-(Triethoxysilyl)propylacrylat (CAS: 20208-39-3), 3-(Trimethoxysilyl)propylacrylat (CAS: 4369-14-6), 3-(Trimethoxysilyl)propylmethacrylat (CAS: 2530-85-0), Methacryloxymethyltriethoxysilan (CAS: 5577-72-0), (Methacryloxymethyl)trimethoxysilan (CAS: 54586-78-6), (3-Acryloxypropyl)methyldimethoxysilan (CAS: 13732-00-8), (Methacryloxymethyl) Methyldimethoxysilan (CAS: 121177-93-3), γ-Methacryloxypropyl methyldimethoxysilan (CAS: 3978-58-3), Methacryloxypropylmethyldiethoxysilan (CAS: 65100-04-1), 3-(dimethoxymethylsilyl)propylmethacrylat (CAS: 14513-34-9), Methyacryloxypropyldimethylethoxysilan (CAS: 13731-98-1), Methacryloxypropyldimethylmethoxysilan (CAS: 66753-64-8). Diese Verbindungen sind besonders bevorzugt, weil sie sich leicht in das Polymernetzwerk der Haftklebemasse bzw. strukturellen Haftklebemasse einbauen lassen, hierbei zu keiner nennenswerten Verringerung der Kohäsion führen und dabei jedoch eine erhebliche Verbesserung der Haftung auf feuchten Oberflächen bewirken. Von den vorgenannten Verbindungen sind 3-(Triethoxysilyl)propylmethacrylat, 3-(Triethoxysilyl)propylacrylat, 3-(Trimethoxysilyl)propylacrylat und 3-(Trimethoxysilyl)propylmethacrylat besonders bevorzugt.

Als (a4) werden *N*-Vinyllactame eingesetzt, besonders bevorzugt sind N-Vinylpyrrolidon, *N*-Vinylpiperidon und *N*-Vinylcaprolactam.

Vorzugsweise weist die optionale Komponente (a5) eine funktionelle Gruppe auf, die thermisch polymerisierbar ist, jedoch zu keiner thermischen kationischen Polymerisation der Epoxid- und/oder Oxetangruppen der Komponente (a2) führt. Dies ist besonders vorteilhaft, weil auf diese Weise eine thermische Vorvernetzung der Zusammensetzung erfolgen kann. Dass zugleich eine thermische kationische Polymerisation der Epoxid- und/oder Oxetangruppen der Komponente (a2) vermieden wird, wirkt sich positiv auf die Lagerstabilität der Zusammensetzung und der daraus erzeugten Haftklebemassen aus. Besonders bevorzugt werden für die optionalen Monomere (a5) beispielsweise Benzyl-(meth)acrylat, Phenyl(meth)acrylat, *tert*-Butylphenyl(meth)acrylat, Phenoxyethyl(meth)-acrlylat, 2-Butoxyethyl(meth)acrylat, *N,N*-Dimethylaminoethyl(meth)acrylat, *N,N*-Diethylaminoethyl(meth)acrylat, Tetrahydrofufurylacrylat, Hydroxyethyl(meth)acrylat, 3-Hydroxypropyl(meth)acrylat, 4-Hydroxybutyl(meth)acrylat, 6-Hydroxyhexyl(meth)acrylat, Cyanoethyl(meth)acrylat, Allylalkohol, Acrylamid, *N-tert*-Butylacrylamid, *N*-Methylol(meth)acrylamid, *N*-(Butoxymethyl)methacrylamid, *N*-(Ethoxymethyl)acrylamid, *N*-Isopropylacrylamid, Styrol, Methylstyrol und 3,4-Dimethoxystyrol verwendet, wobei diese Aufzählung nicht abschließend ist.

Ein weiterer Gegenstand der vorliegenden Erfindung ist ein Verfahren zur Erzeugung einer Haftklebemasse durch Polymerisation einer erfindungsgemäßen Zusammensetzung. Dabei kann die Zusammensetzung während der Polymerisation oder anschließend, das heißt nach erfolgter Polymerisation, einer strahleninduzierten Vernetzungsreaktion unterzogen werden, insbesondere einer UV-induzierten kationischen Polymerisation.

Die Erfindung betrifft ferner eine Haftklebemasse sowie eine strukturelle Haftklebemasse, die durch ein erfindungsgemäßes Verfahren erhältlich sind. Bei der strukturellen Haftklebemasse erfolgt zusätzlich zur Polymerisation der Acrylat-Monomere noch eine Vernetzung der kationisch polymerisierbaren Gruppen, also beispielsweise der Epoxid- und/ oder Oxetangruppen.

Ein weiterer Gegenstand der vorliegenden Erfindung betrifft ein flächiges Klebeelement enthaltend oder bestehend aus einer erfindungsgemäßen Haftklebemasse oder strukturellen Haftklebemasse, wobei das Klebeelement insbesondere ausgewählt ist aus trägerlosen oder geträgerten Stanzlingen, ein- oder beidseitig mit der erfindungsgemäßen Haftklebemasse beschichteten ein- oder doppelseitigen geschäumten oder ungeschäumten Bändern, Bandabschnitten, Transferklebebändern. Die Erfindung betrifft auch Zwischenprodukte, die mit dem oben erwähnten Klebeelement ausgerüstet sind, insbesondere mit einem doppelseitigen Klebeelement.

Die Erfindung betrifft zudem einen Haken, ein dekoratives Element, einen Innenspiegel im Automobil, ein Versteifungsprofil oder ein Fassadenelement, bei dem auf wenigstens einer Oberfläche eine erfindungsgemäße Haftklebemasse oder strukturelle Haftklebemasse und/oder ein erfindungsgemäßes flächiges Klebeelement aufgebracht ist.

Gegenstand der Erfindung ist auch ein Bauteil aus wenigstens zwei Bauelementen, die mit einer erfindungsgemäßen Haftklebemasse oder strukturellen Haftklebemasse und/oder einem erfindungsgemäßen flächigen Klebeelement zumindest abschnittsweise verklebt sind. Dies kann beispielsweise ein KFZ-Bauteil sein, wie eine Scheinwerfereinheit, bei der das Scheinwerferglas mit dem Gehäuseteil verklebt ist.

Die Erfindung betrifft ferner einen Kit, umfassend eine erfindungsgemäße Haftklebemasse oder strukturelle Haftklebemasse und/oder ein erfindungsgemäßes flächiges Klebeelement sowie eine Trennvorrichtung zum Konfektionieren der Haftklebemasse oder des flächigen Klebeelements. Hierdurch kann eine Darreichungsform angeboten werden, bei der der Endanwender die Konfektionierung direkt vor der Anwendung vornehmen kann. Die Trennvorrichtung kann beispielsweise eine Schneidvorrichtung sein, die gewünschtenfalls mit einer Abrollvorrichtung kombiniert ist.

Die Erfindung betrifft schließlich die Verwendung eines alkoxysilanmodifizierten (Meth)Acrylsäureesters in (Meth)Acrylsäureester-basierten Haftklebemassen, insbesondere zur Verbesserung deren Haftung auf feuchten Oberflächen, vorzugsweise auf feuchten Glasoberflächen. Als bevorzugte alkoxysilanmodifizierte (Meth)Acrylsäureester werden solche eingesetzt, wie sie als Komponente (a3) für die erfindungsgemäße Zusammensetzung beschrieben sind.

Zur Polymerisation werden die Monomere dermaßen gewählt, dass die resultierenden Polymere als Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Die Glasübergangstemperatur $T_G$ des Polyacrylats ergibt sich aus der Art und Menge der jeweiligen Comonomere und ergibt sich rechnerisch aus der Fox-Gleichung (G1) (vgl. T.G. Fox, Bull. Am. Phys. Soc. 1956, 1, 123).

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Üblicherweise werden die Comonomere einer Haftklebemasse so gewählt, dass die Glasübergangstemperatur der Polymere unterhalb der Anwendungstemperatur, bevorzugt bei $T_G \leq 15$ °C liegt. Aufgrund der Möglichkeit Epoxidmonomerere einzusetzen, welche im unvernetzten Zustand als Weichmacher wirken, kann die resultierende Glasübergangstemperatur der erfindungsgemäßen Polyacrylatmatrix der strukturellen Haftklebemasse die für Haftklebemassen typischen Glasübergangstemperaturen deutlich überschreiten. Dennoch ist die Comonomerzusammensetzung der erfindungsgemäßen Polyacrylatmatrix so gewählt, dass die Glasübergangstemperatur $T_G \leq 40$ °C, bevorzugt $T_G \leq 30$ °C liegt.

Zur Herstellung der Polyacrylathaftklebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxoinitiatoren. Prinzipiell eignen sich jedoch alle für Acrylate und/oder Methacrylate dem Fachmann geläufigen, üblichen Initiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azobisiisobutyronitril, Cyclohexylsulfonylacetylperoxid, Diisopropylpercarbonat, *tert*-Butylperoktoat, Benzpinacol. Besonders bevorzugt wird als radikalischer Initiator 2,2'-Azobis(2-methylbutyronitril) (Vazo 67™ der Fa. DuPont) verwendet.

Die zahlenmittleren Molekulargewichte Mn der bei der radikalischen Polymerisation entstehenden Haftklebemassen, das heißt vor einer möglichen strahleninduzierten Vernetzungsreaktion, werden sehr bevorzugt derart gewählt, dass sie in einem Bereich von 20.000 bis 2.000.000 g/mol liegen; bevorzugt werden solche Haftklebemassen mit gewichtsmittleren Molekulargewichten Mw von 200.000 bis 20.000.000 g/mol hergestellt, besonders bevorzugt mit gewichtsmittleren Molekulargewichten Mw von 1.000.000 bis 15.000.000 g/mol. Die Bestimmung des mittleren Molekulargewichtes erfolgt über Gelpermeationschromatographie (GPC) gegen PMMA Standards.

Die Bestimmung der mittleren Molekulargewichte (Gewichtsmittel $M_w$ und Zahlenmittel $M_n$) und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 $\mu$m, $10^3$ Å ($10^{-7}$ m), ID 8,0 mm x 50 mm verwendet. Zur Auftrennung wurden die Säulen PSS-SDV, 5 $\mu$m, $10^3$ Å ($10^{-7}$ m), $10^5$ Å ($10^{-5}$ m) und $10^6$ Å ($10^{-4}$ m) mit jeweils ID 8,0 mm $\times$ 300 mm eingesetzt. Die Probenkonzentration betrug 4 g/L, die Durchflussmenge 1,0 mL pro Minute. Es wurde gegen PMMA-Standards gemessen.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether), Ketone (z. B. Aceton, Butanon) und Ether (z. B. Diethylether, Dibutylether) oder Gemische davon.

Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide eingesetzt, wie z. B. (2,2,5,5-Tetramethyl-1-pyrrolidinyl)oxyl (PROXYL), (2,2,6,6-Tetramethyl-1-piperidinyl)oxyl (TEMPO), Derivate des PROXYLs oder des TEMPOs und weitere dem Fachmann geläufige Nitroxide.

Eine Reihe weiterer Polymerisationsmethoden, nach denen die Klebemassen in alternativer Vorgehensweise hergestellt werden können, lassen sich aus dem Stand der Technik wählen: WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen.

Als weitere kontrollierte Polymerisationsmethode lässt sich in vorteilhafter Weise zur Synthese von Blockcopolymeren die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind ferner in den Schriften der US 5,945,491 A, der US 5,854,364 A und der US 5,789,487 A beschrieben.

Als sehr bevorzugter Herstellprozess wird eine Variante der RAFT-Polymerisation (reversible addition-fragmentation chain transfer polymerization) durchgeführt. Der Polymerisationsprozess ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne dass diese Aufzählung Anspruch auf Vollständigkeit erhebt.

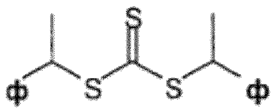

(TTC 1)

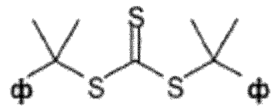

(TTC 2)

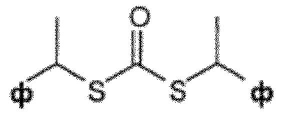 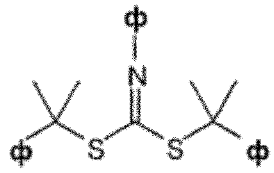

(THI 1) (THI 2)

In Verbindung mit den oben genannten kontrolliert radikalisch verlaufenden Polymerisationen werden Initiatorsysteme bevorzugt, die zusätzlich weitere radikalische Initiatoren zur Polymerisation enthalten, insbesondere die schon zuvor aufgezählten thermisch zerfallenden radikalbildenden Azo- oder Peroxoinitiatoren. Prinzipiell eignen sich hierfür jedoch alle für Acrylate und/oder Methacrylate bekannten üblichen Initiatoren. Weiterhin können auch Radikalquellen verwendet werden, die erst unter UV-Bestrahlung Radikale freisetzen.

Kationisch polymerisierbare Monomere

Die kationisch polymerisierbaren Monomere weisen mindestens eine polymerisierbare funktionelle Gruppe auf und umfassen cyclische Ether wie beispielsweise Epoxide (Oxirane, 1,2-Epoxid), 1,3- (Oxetane) und 1,4-cyklische Ether (1,3- und 1,4-Epoxide) sowie Alkylvinylether, Styrol, p-Methylstyrol, Divinylbenzol, *N*-Vinyl-substituierte Verbindungen, 1-Alkylolefine ($\alpha$-Olefine), Lactame und cyklische Acetale. Bevorzugt sind Epoxide und Oxetane, besonders bevorzugt sind 3,4-Epoxycycohexyl-funktionalisierte Monomere.

Weiterhin können die erfindungsgemäßen kationisch polymerisierbaren Epoxide als Monomere oder Polymere vorliegen und weisen im Durchschnitt ein Molekulargewicht bzw. ein mittleres Molekulargewicht von 58 g/mol bis etwa 1.000 g/mol auf. Die Epoxide können aliphatisch, cycloaliphatisch, aromatisch oder heterocyclisch sein. Bevorzugt beträgt die Anzahl der Epoxyfunktionalitäten pro Molekül eins bis sechs, besonders bevorzugt eins bis drei. Bevorzugte kationisch polymerisierbare Monomere sind aliphatische, cycloaliphatische Epoxide und Glycidylether, wie Propylenoxid, Epichlorhydrin, Styroloxid, Vinylcyclohexenoxid, Cyclohexenoxid, Vinylcyclohexendioxid, Glycidol, Butadienoxid, Glycidylmethacrylat, Bisphenol-A-diglycidylether (z.B. Epon 828, Epon 825, Epon 1004, Epon 1001, Momentive Speciality Chemicals), Dicyclopentadiendioxid, epoxidierte Polybutadiene (z.B. Oxiron 2001, FMC Corp.), 1,4-Butandioldiglycidether, 1,2-Cyclohexandicarbonsäurediglycidylester, Polyglycidether von Phenolharzen basierend auf Resol oder Novolaken (z.B. DEN 431, DEN 438, Dow Chemical), Resorcindiglycidylether und epoxidierte Silicone wie beispielsweise Dimethylsiloxane mit Glycidylether- oder Epoxyxcyclohexangruppen. Besonders bevorzugt sind 3,4-Epoxycycohexyl-funktionalisierte Monomere, wie beispielsweise 3,4-Epoxycyclohexylmethylacrylat, 3,4-Epoxycyclohexylmethylmethacrylat, 3,4-Epoxycyclohexylmethyl-3,4-epoxycyclohexan-carboxylat, 3,4-Epoxy-6-methylcyclohexylmethyl-3,4-epoxy-6-methylcyclohexan-carboxylat, Bis(3,4-epoxy-6-methylcyclohexylmethyl)adipat, 1,4-Cyclohexandimethanol-bis(3,4-epoxycyclohexancarboxylat) sowie 3,4-Epoxycyclohexylmethyl-3',4'-epoxycyclo-hexancarboxylat-modifizierte $\varepsilon$-Caprolactone (CAS-Nr. 139198-19-9 (Celloxide 2081, Fa. Daicel, Japan) und 151629-49-1 (Tetrachem, Fa. Hainan Zhongxin Chemical, China).

Ebenfalls erfinderisch sind Mischungen der zuvor genannten sowie aller weiteren, dem Fachmann geläufigen, kationisch polymerisierbaren Monomere. Vorteilhafte Mischungen umfassen zwei oder mehrere Epoxide, wobei die Epoxide unterschiedliche Molekulargewichte aufweisen und gruppiert werden können in welche mit einem niedrigen Molekulargewicht ($M < 200$ g/mol), mit einem mittleren Molekulargewichtsbereich (200 g/mol $< M <$ 1.000 g/mol) und einem hohen Molekulargewicht ($M >$ 1.000 g/mol). Weiterhin kann es von Vorteil sein, Mischungen aus Epoxiden mit unterschiedlicher Anzahl an Epoxygruppen einzusetzen. Optional können weitere kationisch polymerisierbare Monomere zugemischt werden.

Vorteilhaft wird die Konzentration des Epoxidmonomers bzw. der Epoxidmonomermischung so gewählt, dass sich eine Epoxidkonzetration von 0,001 mmol Epoxid/g Polymer bis 4 mmol Epoxid/g Polymer, bevorzugt 0,01 mmol Epoxid/g Polymer bis 2,5 mmol Epoxid/g Polymer ergibt.

Kationische Photoinitiatoren

Nach einer bevorzugten Ausführungsform der erfindungsgemäßen Zusammensetzung umfasst diese zumindest einen kationischen Photoinitiator. Der kationische Photoinitiator fragmentiert mittels aktinischer Strahlung, bevorzugt UV-Strahlung, wobei eines oder mehrere dieser Fragmente eine Lewis- oder Brønsted-Säure ist, welche die kationische Polymerisation sowie die zeitgleich stattfindende Vernetzung der Polyacrylat- mit der sich bildenden Epoxymatrix katalysiert. Vorteilhafte Photoinitiatoren sind thermisch stabil, führen auch nicht durch thermische Aktivierung zu einer Polymerisation der Monomere und sind sowohl in der un- als auch in der ausgehärteten strukturellen Haftklebemasseformulierung löslich. Weiter ist es von Vorteil, dass die durch Fragmentierung des Photoinitiators freigesetzten Säuren einen pKs < 0 aufweisen.

Die Photoinitiatoren sind ionische Verbindungen, wobei die Kationen bevorzugt auf organischen Onium-Strukturen basieren, insbesondere auf Salzen mit aliphatischen und aromatischen Gruppe IVA bis VIIA (CAS-Nomenklatur) - zentrierten Onium-Kationen, besonders bevorzugt auf I-, S-, P-, Se-, N- und C-zentrierten Onium-Salzen, gewählt aus der Gruppe der Sulfoxonium-, Iodonium-, Sulfonium-, Selenonium-, Pyridinium-, Carbonium- und Phosphonium- Salze, noch weiter bevorzugt auf den I- und S-zentrierten Onium-Salzen, wie beispielsweise Sulfoxonium-, Diaryliodonium-, Triarylsulfonium-, Diarylalkylsulfonium-, Dialkylarylsulfonium- und Trialkylsulfonium-Salze.

Die Natur des Anions des Photoinitiators kann die Reaktionsgeschwindigkeit sowie den Umsatz der kationischen Polymerisation beeinflussen. So beschreiben beispielsweise J.V. Crivello und R. Narayan in Chem. Mater. 1992, 4, 692 eine Reaktivitätsreihenfolge von gängigen Gegenionen wie folgt: $SbF_6^- > AsF_6^- > PF_6^- > BF_4^-$. Die Reaktivität des Anions hängt dabei von folgenden Faktoren ab: (1) der Acidität der freigesetzten Lewis- oder Brønsted-Säure, (2) dem Grad der Ionenpaar-Separation in der wachsenden kationischen Kette und (3) der Anfälligkeit des Anions gegenüber Fluorid-Abstraktion sowie Kettenterminierung. Weiterhin kann $B(C_6F_5)_4^-$ als Anion verwendet werden.

Vorteilhafte Photoinitiatoren umfassen Bis(4-*tert*-butylphenyl)iodoniumhexafluoro-antimonat (FP5034™ von Hampford Research Inc.), eine Mischung aus Triarylsulfonium-Salzen (Diphenyl-(4-phenylthio)phenylsulfoniumhexafluoroantimonat und Bis(4-diphenyl-sulfonio)phenyl)sulfidhexafluoroantimonat) erhältlich als Syna PI-6976™ von Synasia, (4-Methoxyphenyl)phenyliodoniumtriflat, Bis(4-*tert*-butylphenyl)iodoniumcamphersulfonat, Bis(4-*tert*-butylphenyl)iodoniumhexafluoroantimonat, Bis(4-*tert*-butylphenyl)iodonium-hexafluorophosphat, Bis(4-*tert*-butylphenyl)iodoniumtetrafluoroborat, Bis(4-*tert*-butylphenyl)iodoniumtriflat, [4-(Octyloxy)phenyl]phenyliodoniumhexafluorophosphat, [4-(Octyloxy)phenyl]phenyliodoniumhexafluoroantimonat, Bis(4-methylphenyl)iodoniumhexafluorophosphat (erhältlich als Omnicat 440™ von IGM Resins), 4-[(2-Hydroxy-1-tetradecyloxy)phenyl]phenyliodoniumhexafluoroantimonat, Triphenylsulfoniumhexafluoroantimonat (erhältlich als CT-548™ von Chitec Technology Corp.), Diphenyl(4-phenylthio)phenylsulfoniumhexafluorophosphat, Diphenyl(4-phenylthio)phenylsulfoniumhexafluoroantimonat, Bis(4-(Diphenylsulfonio)phenyl)sulfid-hexafluoroantimonat, wobei diese Aufzählung nicht abschließend zu verstehen ist.

Die Konzentration des Photoinitiators wird so gewählt, dass der gewünschte Vernetzungs- und Polymerisationsgrad erzielt wird, welche wiederum aufgrund unterschiedlicher Schichtdicken der strukturellen Haftklebmasse und der der gewünschten Klebeigenschaften variieren können. Weiter hängt die benötigte Photoinitiatorkonzentration von der Quantenausbeute (die Anzahl der freigesetzten Säuremoleküle pro absorbiertem Proton) des Initiators, dem pKa-Wert der Säure, der Permeabilität der Polymermatrix, der Wellenlänge und Dauer der Bestrahlung sowie der Temperatur ab. Generell werden Konzentrationen von 0,01 bis 2 Gewichtsteile, insbesondere 0,1 bis 1,5 Gewichtsteile bezogen auf 100 Gewichtsteile des Polyacrylats sowie der kationisch polymerisierbaren Monomere, bevorzugt.

Weiterhin ist der Einsatz von Photosensitizern oder Photobeschleunigern in Kombination mit den Photoinitiatoren ebenfalls im Sinne der Erfindung. Durch Photosensitizer und Photobeschleuniger wird die Wellenlängensensitivität des Photoinitiators verändert bzw. verbessert. Dies ist insbesondere von Vorteil, wenn die Absorption des einfallenden Lichtes vom Initiator nur ungenügend ist. Die Verwendung von Photosensitizern und Photobeschleunigern erhöht die Sensitivität gegenüber elektromagnetischer, insbesondere aktinischer Strahlung und erlaubt somit kürzere Bestrahlungszeiten und/oder die Nutzung von Strahlungsquellen geringerer Leistung. Beispielhaft für Photosensitizer und Photobeschleuniger seien Pyren, Fluoranthen, Xanthon, Thioxanthon, Benzophenon, Acetophenon, Benzil, Benzoin und Benzoinether, Chrysen, p-Terphenyl, Acenaphthen, Naphthalen, Phenanthren, Biphenyl sowie substituierte Derivate der zuvor genannten Verbindungen genannt. Sofern benötigt, beträgt die Menge an Photosensitizer oder Photobeschleuniger weniger als 10 Gew.-%, bevorzugt weniger als 1 Gew.-% bezogen auf die Menge des Photoinitiators.

Die strukturelle Haftklebemasse kann zusätzlich noch weitere Additive enthalten, wobei Klebharze, Weichmacher, Farbstoffe, Alterungsschutzmittel, Voll- oder Hohlglaskugeln, Kieselsäure, Silikate, Keimbildner, Blähmittel bevorzugt sind. Die Additive können verwendet werden, sofern sie nicht die Eigenschaften und den Härtemechanismus der strukturellen Haftklebemasse negativ beeinflussen. Die optionalen Klebharze werden vorteilhaft in Mengen bis zu 50 Gew.-%, bevorzugt bis zu 40 Gew.-%, noch bevorzugter bis zu 30 Gew.-% bezogen auf das Polymer eingesetzt. Üblicherweise können Kolophoniumester, Terpen-Phenol-, Kohlenwasserstoff- und Inden-Cumaron-Harze eingesetzt werden. Durch die Menge und Art des Klebharzes können die Benetzung, die Klebkraft, die Verklebung auf unterschiedlich polaren Substanzen, die Wärmestabilität und der Tack beeinflusst werden.

Ebenfalls im Sinne der Erfindung können die strukturellen Haftklebemassen schon vor der UV-Aktivierung zur Erhöhung der inneren Festigkeit (Kohäsion) chemisch vernetzt sein. Als Vernetzer werden bevorzugt Metallchelate, multifunktionelle Isocyanate, multifunktionelle Epoxide, multifunktionelle Aziridine, multifunktionelle Oxazoline oder multifunktionelle Carbodiimide eingesetzt.

Die zuvor beschriebenen erfindungsgemäßen strukturellen Haftklebemassen eignen sich hervorragend zur Herstellung von einseitigen oder doppelseitigen Klebebändern, wobei alle dem Fachmann geläufigen Trägermaterialien verwendet werden können. Beispielhaft, aber nicht einschränkend sind PET-, PVC- und PP-Folien, Papier, Vliese, Gewebe und Schäume als Trägermaterialien einsetzbar.

Erfindungsgemäße strukturelle Haftklebebandprodukte bestehend aus den zuvor beschriebenen erfindungsgemäßen strukturellen Haftklebemasseformulierungen umfassen:

- (geschäumte und ungeschäumte) Transferklebebänder (Trägerlose doppelseitige Klebebänder)
- Einseitige Klebebänder
- Doppelseitige Klebebänder umfassend mindestens eine äußere Schicht bestehend aus den erfindungsgemäßen strukturellen Haftklebemasseformulierungen.

Weiterhin kann es für den Prozess und für die Verankerung der strukturellen Haftklebemasseschicht mit weiteren möglichen Schichten, einer Folie auf Basis von Polyester, Polyamid, Polymethacrylat, PVC, etc. oder einem viskoelastischen geschäumten oder ungeschäumten Träger auf Basis von Polyacrylat oder Polyurethan von Vorteil sein, wenn eine chemische Verankerung z. B. über einen Primer stattfindet.

Das Klebeband ist für Transport, Lagerung oder Stanzung vorzugsweise mindestens einseitig mit einem Liner versehen, also zum Beispiel einer silikonbeschichteten Folie oder einem Silikonpapier.

Eine weitere vorteilhafte Ausführung der Erfindung ist die Verwendung einer trägerfreien Klebemasse für das selbstklebende Klebeband. Als trägerfreie Klebemasse wird eine Klebemasse bezeichnet, die keinen dauerhaften Träger, wie eine Polymerfolie oder ein Vlies, aufweist. Vielmehr ist die selbstklebende Masse in bevorzugter Ausgestaltung lediglich auf einen Liner, also ein Material, das lediglich vorübergehend zur Stützung und leichteren Auftragbarkeit der selbstklebenden Masse dient, aufgebracht. Nach dem Aufbringen der selbstklebenden Masse auf die Substratoberfläche wird der Liner dann entfernt und der Liner stellt somit kein produktives Bauteil dar.

Die Herstellung der erfindungsgemäßen Haftklebemassen kann aus Lösung sowie aus der Schmelze erfolgen. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebemasseschicht.

Im Folgenden wird die Erfindung anhand der Beispiele näher erläutert, ohne die Erfindung damit zu beschränken.

**Experimenteller Teil**

Sofern im Einzelnen nichts anderes angegeben ist oder sich ergibt, erfolgen die Probenvorbereitungen und die Messungen unter Standardbedingungen (25 °C, 101325 Pa).

I. Molekulargewichte

Die Bestimmung der mittleren Molekulargewichte (Gewichtsmittel $M_w$ und Zahlenmittel $M_n$) und der Polydispersität D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 μm, $10^3$ Å ($10^{-7}$ m), ID 8,0 mm x 50 mm verwendet. Zur Auftrennung wurden die Säulen PSS-SDV, 5 μm, $10^3$ Å ($10^{-7}$ m), $10^5$ Å ($10^{-5}$ m) und $10^6$ Å ($10^{-4}$ m) mit jeweils ID 8,0 mm x 300 mm eingesetzt. Die Probenkonzentration betrug 4 g/L, die Durchflussmenge 1,0 mL pro Minute. Es wurde gegen PMMA-Standards gemessen.

II. Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

III. K-Wert (nach FIKENTSCHER):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 1967, 8, 381 ff.)

IV. Quantitative Ermittlung der Scherfestigkeit: Statischer Schertest SSZ

Ein rechteckiges Prüfmuster der Größe 13 mm x 20 mm des zu prüfenden doppelseitigen Klebebandes wird zwischen zwei Stahlplättchen (50 mm x 25 mm x 2mm; Material nach DIN EN 10088-2, Typ 1, 4301, Oberflächenqualität

2R, kaltgewalzt und blankgeglüht, Ra = 25 - 75 nm) so verklebt, dass die Verklebungsfläche des Prüfmusters mit beiden Stahlplättchen je 260 $mm^2$ beträgt, die Stahlplättchen in Längsrichtung versetzt parallel ausgerichtet sind, so dass das Prüfmuster mittig zwischen ihnen verklebt ist und die Stahlplättchen auf unterschiedlichen Seiten über das Prüfmuster hinausragen. Anschließend wird für 1 min mit einem Anpressdruck von 100 $N/cm^2$ verpresst. Nach vorgegebener Aufziehzeit (sofern nicht anders angegeben, 72 Stunden bei Raumtemperatur) werden die so präparierten Prüfkörper mit dem einen über das Prüfmuster hinausragenden Stahlplättchenbereich an einem Schertestmessplatz derart aufgehängt, das die Längsrichtung der Stahlplättchen nach unten ausgerichtet ist, und der über das Prüfmuster hinausragende Bereich des anderen Stahlplättchens wird bei vorgegebener Temperatur mit einem gewählten Gewicht belastet (Messungen bei Raumtemperatur und mit 20 N Belastung sowie bei 70 °C und mit 10 N Belastung; siehe Angaben in der jeweiligen Tabelle). Prüfklima: Standardbedingungen, 50 % rel. Feuchte. Eine automatische Zähleruhr ermittelt nun die Zeitdauer bis zum Versagen der Prüfmuster in min (Abfallen des belasteten Stahlplättchens).

V. Schälfestigkeit (Klebkraft) KK

Ein Streifen des zu untersuchenden (Haft-)Klebebandes wird in definierter Breite (Standard: 20 mm) auf dem jeweiligen Prüfuntergrund (im Falle von Stahl handelt es sich um rostfreien Stahl 302 nach ASTM A 666; 50 mm x 125 mm x 1,1 mm; glänzende geglühte Oberfläche; Oberflächenrauigkeit Ra = 50 $\pm$ 25 nm arithmetische Durchschnittsabweichung von der Basislinie) durch zehnmaliges Überrollen mittels einer 5 kg Stahlrolle verklebt. Doppelseitig klebende Klebebänder werden mit einer 36 $\mu$m dicken Hart-PVC-Folie rückseitig verstärkt. Jeweils identische Proben werden hergestellt und entweder für eine Sofortmessung bereitgestellt, 3 Tage gelagert und vermessen bzw. 14 Tage gelagert und vermessen.

Die präparierte Platte wird in das Prüfgerät eingespannt (fixiert) und der Klebestreifen über sein freies Ende an einer Zugprüfmaschine unter einem Schälwinkel von 90° mit einer Geschwindigkeit von 300 mm/min in Längsrichtung des Klebebandes von der Platte abgezogen. Die dafür notwendige Kraft wird ermittelt. Die Messergebnisse sind in N/cm angegeben (Kraft normiert auf die jeweils gelöste Verklebungsstrecke) und über drei Messungen gemittelt. Alle Messungen werden in einem klimatisierten Raum bei 23 °C und 50 % relativer Luftfeuchte durchgeführt.

VI. Mikroschertest

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13mm · 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)·100 / max].

VII Dynamische Scherfestigkeit:

Ein quadratisches Transferklebeband mit einer Kantenlänge von 25 mm wird zwischen zwei Stahlplatten überlappend verklebt und 1 Minute lang mit 0,9 kN angedrückt (Kraft P). Nach einer Lagerung von 24 h wird der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen werden. Die Maximalkraft wird in $N/cm^2$ ermittelt.

VIII Probe-Tack-Test:

Die Probe-Tack-Messung erfolgt gemäß ASTM D2979-01. Eine Stahl-Prüfplatte wird mit Aceton gereinigt und anschließend für 30 min bei Raumtemperatur konditioniert. Dann wird die Probe in Form eines Transfertapes blasenfrei und definiert durch dreimaliges Überrollen mit einer 2 kg-Rolle mit einer Geschwindigkeit von 150 mm/s auf der Platte verklebt. Zum Aufziehen des Klebestreifens auf das Substrat wird die Platte 12 Stunden im Klimaraum bei 23°C und 50 % rel. Feuchtigkeit gelagert. Dabei muss die zu messende Oberfläche z.B. mit einem Trennpapier abgedeckt sein. Der Tackstempel (zylindrische Form, Durchmesser 6 mm, rostfreier Stahl), mit dem die Messung durchgeführt wird, wird mit Aceton gereinigt und 30 min bei Raumtemperatur konditioniert. Das Trennpapier wird erst unmittelbar vor der Messung vom Klebstreifen entfernt. Vor der Messung mit dem Texture Analyser TA.XT plus (Stable Micro Sytems, Ltd.) wird die Kraft mit einem 2kg Gewicht sowie der Messweg kalibriert. Es werden je Probe 5 bis 10 Einzelmessungen durchgeführt und jeweils der Mittelwert gebildet.

Parameter: Vorgeschwindigkeit: 1 mm/s, Testgeschwindigkeit: 0,01 mm/s, Trigger Force: 0,005 N, Abzugsgeschwindigkeit: 10 mm/s, Kontaktzeit: 1 s, Andruckkraft: 0,27 N.

Für die Bewertung der Muster wird im Folgenden nur die Maimalkraft am ersten Kraftpeak angegeben.

Tabelle 1: Verwendete Rohstoffe:

| *Chemische Verbindung* | *Handelsname* | *Hersteller* | CAS-Nr. |
|---|---|---|---|
| Bis-(4-*tert*-butylcyclohexyl)peroxydicarbonat | Perkadox® 16 | Akzo Nobel | 15520-11-3 |
| 2,2'-Azobis(2-methylbutyronitrile) | Vazo® 67 | DuPont | 13472-08-7 |
| 3,4-Epoxycyclohexylmethylmethacrylat | S-100 | Synasia | 82428-30-6 |
| 3-Methacryloxypropyltrimethoxysilan | Dynasylan® MEMO | Evonik | 2530-85-0 |
| 3-Methacryloxypropylmethyldiethoxysilan | KBE-502 | Shin-Etsu | 65100-04-1 |
| 3-Glycidyloxypropyltriethoxysilan | Dynasylan® GLYEO | Evonik | 2602-34-8 |
| Silan-terminierter Polyether | MS Polymer™ S303H | Kaneka | 75009-88-0 |
| (3,4-Epoxycyclohexan)methyl-3,4-epoxycyclohexylcarboxylat | Uvacure 1500 | Cytec | 2386-87-0 |
| Triarylsulfoniumhexafluoroantimonat | | über Sigma-Aldrich | - |

Herstellung Basispolymer Ac1

Ein für radikalische Polymerisationen konventioneller Reaktor wurde mit 30,0 kg 2-Ethylhexylacrylat, 30,0 kg Butylacrylat, 5,0 kg 3,4-Epoxycyclohexylmethylmethacrylat, 10,0 kg 3-Methacryloxypropyltrimethoxysilan, 25,0 kg *N*-Vinylcaprolactam und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Perkadox 16, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Perkadox 16, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,1 % und wurde getrocknet. Das resultierende Polyacrylat hatte einen K-Wert von 69,8, ein gewichtsmittleres Molekulargewicht von Mw = 10.275.000 g/mol und ein zahlenmittleres Molekulargewicht von Mn = 38.500 g/mol.

Herstellung Basispolymer Ac2:

Ein für radikalische Polymerisationen konventioneller Reaktor wurde mit 35,0 kg 2-Ethylhexylacrylat, 20,0 kg Butylacrylat, 10,0 kg 3,4-Epoxycyclohexylmethylmethacrylat, 20,0 kg 3-Methacryloxypropylmethyldiethoxysilan, 15,0 kg *N*-Vinylpyrrolidon und 66,7 kg Aceton/ Isopropanol (94:6) befüllt. Nach 45minütiger Durchleitung von Stickstoffgas unter

Rühren wurde der Reaktor auf 58 °C hochgeheizt und 50 g Vazo 67, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g Vazo 67, gelöst in 500 g Aceton, zugegeben und nach 4 h wurde mit 12,1 kg Aceton/Isopropanol-Gemisch (94:6) verdünnt.

Nach 5 sowie nach 7 h wurde jeweils mit 150 g Perkadox 16, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 50,5 % und wurde getrocknet. Das resultierende Polyacrylat hatte einen K-Wert von 68,5, ein gewichtsmittleres Molekulargewicht von Mw = 10.900.000 g/mol und ein zahlenmittleres Molekulargewicht von Mn = 20.100 g/mol.

Herstellung Basispolymer Ac3:

Ein für radikalische Polymerisationen konventioneller Reaktor wurde mit 30,0 kg 2-Ethylhexylacrylat, 20,0 kg Butylacrylat, 20,0 kg 3,4-Epoxycyclohexylmethylmethacrylat, 10,0 kg 3-Methacryloxypropylmethyldiethoxysilan, 20,0 kg *N*-Vinylpyrrolidon und 66,7 kg Aceton/ Isopropanol (94:6) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g Vazo 67, gelöst in 500 g Aceton, zugegeben und nach 4 h wurde mit 12,1 kg Aceton/Isopropanol-Gemisch (94:6) verdünnt.

Nach 22 h Reaktionszeit wurde die Polymerisation abgebrochen und auf Raumtemperatur abgekühlt. Das Produkt hatte einen Feststoffgehalt von 50,1 % und wurde getrocknet. Das resultierende Polyacrylat hatte einen K-Wert von 55,5, ein gewichtsmittleres Molekulargewicht von Mw = 1.900.000 g/mol und ein zahlenmittleres Molekulargewicht von Mn = 28.200 g/mol.

Herstellung Vergleichspolymer VA4 (kein Alkoxysilanmodifizierter (Meth)Acrylsäureester).

Ein für radikalische Polymerisationen konventioneller Reaktor wurde mit 35,0 kg 2-Ethylhexylacrylat, 35,0 kg Butylacrylat, 5,0 kg 3,4-Epoxycyclohexylmethylmethacrylat, 25,0 kg *N*-Vinylcaprolactam und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Perkadox 16, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Perkadox 16, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,2 % und wurde getrocknet. Das resultierende Polyacrylat hatte einen K-Wert von 70,0, ein gewichtsmittleres Molekulargewicht von Mw = 11.050.000 g/mol und ein zahlenmittleres Molekulargewicht von Mn = 35.700 g/mol.

Herstellung Vergleichspolymer VA5 (ohne *N*-Vinyllactam)

Ein für radikalische Polymerisationen konventioneller Reaktor wurde mit 40,0 kg 2-Ethylhexylacrylat, 40,0 kg Butylacrylat, 10,0 kg 3,4-Epoxycyclohexylmethylmethacrylat, 10,0 kg 3-Methacryloxypropyltrimethoxysilan und 66,7 kg Aceton/ Isopropanol (96:4) befüllt. Nach 45minütiger Durchleitung von Stickstoffgas unter Rühren wurde der Reaktor auf 58 °C hochgeheizt und 50 g Vazo 67, gelöst in 500 g Aceton, hinzugegeben. Anschließend wurde das äußere Heizbad auf 70 °C erwärmt und die Reaktion konstant bei dieser Außentemperatur durchgeführt. Nach 1 h wurden erneut 50 g Vazo 67, gelöst in 500 g Aceton, zugegeben und nach 2 h mit 10 kg Aceton/Isopropanol-Gemisch (96:4) verdünnt. Nach 5,5 h wurden 150 g Perkadox 16, gelöst in 500 g Aceton, zugegeben; nach 6 h 30 min wurde erneut mit 10 kg Aceton/Isopropanol-Gemisch (96:4) verdünnt. Nach 7 h wurden weitere 150 g Perkadox 16, gelöst in 500 g Aceton, zugegeben und das Heizbad auf eine Temperatur von 60 °C eingeregelt.

Nach 22 h Reaktionszeit wurde die Polymerisation abgebrochen und auf Raumtemperatur abgekühlt. Das Produkt hatte einen Feststoffgehalt von 50,8 % und wurde getrocknet. Das resultierende Polyacrylat hatte einen K-Wert von 56,6, ein gewichtsmittleres Molekulargewicht von Mw = 1.420.000 g/mol und ein zahlenmittleres Molekulargewicht von Mn = 15.000 g/mol.

**Beispiele**

Herstellung Haftklebemassen PSA1 bis PSA9 sowie Vergleichsklebemassen VPSA10 bis VPSA21

Tabelle 2: Massespezifische Angaben

| Name | Basispolymer | Epoxymonomer / Konzentration [phr] | Silanadditiv / Konzentration [phr] |
|---|---|---|---|
| PSA1 | Ac1 | - | - |
| PSA2 | Ac1 | Uvacure 1500 (2,5) | - |
| PSA3 | Ac1 | Uvacure 1500 (5) | - |
| PSA4 | Ac2 | - | - |
| PSA5 | Ac2 | Uvacure 1500 (2,5) | - |
| PSA6 | Ac2 | Uvacure 1500 (5) | - |
| PSA7 | Ac3 | - | - |
| PSA8 | Ac3 | Uvacure 1500 (2,5) | - |
| PSA9 | Ac3 | Uvacure 1500 (5) | - |
| VPSA10 | VA4 | - | - |
| VPSA11 | VA4 | Uvacure 1500 (2,5) | - |
| VPSA12 | VA4 | - | GLYEO (10) |
| VPSA13 | VA4 | Uvacure 1500 (2,5) | GLYEO (10) |
| VPSA14 | VA4 | - | S303H (10) |
| VPSA15 | VA4 | Uvacure 1500 (2,5) | S303H (10) |
| VPSA16 | VA5 | - | - |
| VPSA17 | VA5 | Uvacure 1500 (2,5) | - |
| VPSA18 | VA5 | - | GLYEO (10) |
| VPSA19 | VA5 | Uvacure 1500 (2,5) | GLYEO (10) |
| VPSA20 | Ac1 | - | GLYEO (10) |
| VPSA21 | Ac1 | - | S303H (10) |

Der Initiator wurde stets im Dunkeln und in Aceton gelöst zu der Klebemasseformulierung gegeben, welche anschließend unter starkem Rühren gut durchmischt wurde. Die folgenden Beispiele enthalten jeweils 1,35 Gew.-% Triarylsulfoniumhexafluoroantimonat bezogen auf das Polymer.

Die fertige Formulierung wurde auf einen Feststoffgehalt von 30 % mit Aceton verdünnt und dann aus Lösung auf eine silikonisierte Trennfolie (50 μm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug jeweils 100 g/m$^2$. Es wurde kein Unterschied hinsichtlich der Produkteigenschaften zwischen der Trocknung bei den zuvor angegebenen Temperaturen oder einer deutlich langsameren bei Raumtemperatur festgestellt.

Tabelle 3: Klebtechnische Ergebnisse ohne UV-Bestrahlung

| Haftklebemasse | Klebkraft Stahl [N/cm] | Klebkraft Glas [N/cm] | Klebkraft nasses Glas [a)] [N/cm] | Scherstandszeit [min] [b)] |
|---|---|---|---|---|
| PSA1 | 4,6 | 2,1 | 1,9 | 1.500 |
| PSA2 | 5,2 | 2,3 | 2,0 | 1.200 |
| PSA3 | 5,3 | 2,2 | 1,9 | 1.180 |

(fortgesetzt)

| Haftklebemasse | Klebkraft Stahl [N/cm] | Klebkraft Glas [N/cm] | Klebkraft nasses Glas [a] [N/cm] | Scherstandszeit [min] [b] |
|---|---|---|---|---|
| PSA4 | 4,4 | 2,0 | 2,0 | 1.450 |
| PSA5 | 5,6 | 2,2 | 2,1 | 1.080 |
| PSA6 | 6,3 | 2,3 | 2,2 | 1.020 |
| PSA7 | 5,2 | 2,8 | 2,7 | 1.700 |
| PSA8 | 6,1 | 2,9 | 2,7 | 1.560 |
| PSA9 | 6,5 | 2,9 | 2,8 | 1.640 |
| VPSA10 | 5,2 | 0,8 | 0,2 | 1.600 |
| VPSA11 | 6,6 | 0,9 | 0,2 | 1.230 |
| VPSA12 | 6,9 | 2,2 | 1,1 | 150 |
| VPSA13 | 7,0 | 2,2 | 1,1 | < 10 |
| VPSA14 | 6,2 | 1,9 | 0,9 | 220 |
| VPSA15 | 6,6 | 2,2 | 1,0 | 160 |
| VPSA16 | 4,8 | 0,6 | 0,2 | 600 |
| VPSA17 | 4,9 | 0,6 | 0,2 | 480 |
| VPSA18 | 5,2 | 1,9 | 1,1 | < 10 |
| VPSA19 | 5,2 | 2,0 | 1,2 | < 10 |
| VPSA20 | 5,2 | 2,5 | 2,4 | 780 |
| VPSA21 | 5,1 | 2,7 | 2,5 | 920 |

[a] Die Glassubstrate wurden in entionisertem Wasser 24 h bei Raumtemperatur gelagert, kurz vor der Messung erst aus dem Wasserbad genommen, für 10 min an der Luft konditioniert und noch im nassen Zustand beklebt.
[b] Sofern keine Angaben zum Bruchbild gegeben werden, handelt es sich um ein kohäsives Versagen der Klebemasse.

Zur Beurteilung der Eignung der Muster als Haftklebemasse vor der UV-Bestrahlung wurde die Klebkraft auf Stahl, Glas, nassem Glas sowie die statische Scherstandzeit bei Raumtemperatur bestimmt. Es zeigt sich, dass alle erfindungsgemäßen strukturellen Haftklebmassen sowie die Formulierungen mit einem Epoxymonomer (PSA1 bis PSA9) vergleichbare Klebkräfte wie eine typische Acrylathaftklebemasse sowie eine gute Kohäsion aufzeigen, wobei letzteres trotz des Verzichts auf einen zusätzlichen chemischen Vernetzers realisiert werden konnte. Alle Vergleichshaftklebemassen zeigen zwar teilweise vergleichbare Klebkräfte auf Glas, jedoch bricht diese in den Fällen VPSA10 bis VPSA19 auf nassem Glas drastisch ein. Die Verwendung von Epoxymonomeren im Falle der Vergleichshaftklebemassen resultiert generell in etwas höheren Klebkräften auf Glas und in einer deutlichen Verminderung der Kohäsion (VPSA11 und VPSA17). Gleiches gilt für Silan-Additive, welche nicht an das Polymerrückgrat gebunden sind (VPSA12 bis VPSA15 sowie VPSA18 bis VPSA19). In den Vergleichsbeispielen VPSA20 und VPS21 wird das erfindungsgemäße Polymer Ac1 ebenfalls mit Silanen gemischt. Die Klebkräfte sind vergleichbar mit denen der erfindungsgemäßen Beispiele, jedoch resultiert erneut eine deutlich geringere Kohäsion, weshalb in diesen Fällen eine Vorfixierung der zu verklebenden Bauteile nicht gewährleistet ist bzw. die Verklebung nach der UV-Aktivierung bis zum Erreichen des maximalen Vernetzungsgrades aufgrund der mangelnden Kohäsion ohne Fixierung versagen würde.

UV-Vernetzung der strukturellen Haftklebemassen PSA1 bis PSA9 sowie der Vergleichsklebemassen VPSA10 bis VPSA21

Die zuvor hergestellten, 100 μm dicken Klebebandmuster wurden jeweils auf eine Stahl- bzw. eine nasse Glasplatte blasenfrei aufgebracht. Durch die Regelung der Lampenleistung und der Rollgeschwindigkeit des Fließbandes konnte die Dosis variiert werden, wobei die optimale Dosis jeweils 80 $mJ/cm^2$ betrug. Nach Bestrahlung der offenen Seite wurde innerhalb von 30 Sekunden eine weitere Stahl- bzw. nasse Glasplatte auf die zuvor bestrahlte Oberfläche gemäß Messmethode VII geklebt. Bei Zeiten zwischen UV-Bestrahlung und Verklebung länger als fünf Minuten war die

Oberfläche schon so stark vernetzt, dass die Haftung auf der Stahlplatte nicht mehr ausreichend war.

Tabelle 4: Klebtechnische Eigenschaften nach UV-Vernetzung

| Haftklebe-masse | Mikroscher-test max [μm] | Mikroschertestel. Anteil [%] | Probe Tack [N][c)] | Dyn. Scherfestigkeit Stahl [N/cm$^2$][d)] | Dyn. Scherfestigkeit nasses Glas [N/cm$^2$][a,d)] |
|---|---|---|---|---|---|
| PSA1 | 57 | 57 | 2,5 | 120 | 75 |
| PSA2 | 79 | 72 | 2,3 | 141 | 81 |
| PSA3 | 79 | 75 | 2,2 | 132 (A) | 82 (A) |
| PSA4 | 58 | 63 | 2,7 | 132 | 99 |
| PSA5 | 45 | 88 | 2,7 | 156 | 120 |
| PSA6 | 39 | 98 | 1,8 | 110 (A) | 96 (A) |
| PSA7 | 74 | 68 | 2,2 | 128 | 81 |
| PSA8 | 66 | 78 | 1,3 | 135 | 95 |
| PSA9 | 62 | 85 | 1,3 | 142 | 96 |
| VPSA10 | 80 | 63 | 2,2 | 105 | 10 |
| VPSA11 | 65 | 85 | 1,9 | 115 | 8 |
| VPSA12 | 78 | 65 | 2,1 | 110 | 30 |
| VPSA13 | 62 | 79 | 1,8 | 112 | 51 |
| VPSA14 | 86 | 62 | 2,3 | 86 | 22 |
| VPSA15 | 77 | 80 | 1,9 | 99 | 26 |
| VPSA16 | 68 | 65 | 1,4 | 68 | 69 |
| VPSA17 | 58 | 84 | 1,2 | 52 (A) | 20 (A) |
| VPSA18 | 78 | 59 | 1,4 | 48 | 72 |
| VPSA19 | 61 | 78 | 1,2 | 50 (A) | 25 (A) |
| VPSA20 | 63 | 55 | 2,6 | 89 | 69 |
| VPSA21 | 75 | 48 | 2,4 | 67 | 21 |

[a)] Die Glassubstrate wurden in entionisertem Wasser 24 h bei Raumtemperatur gelagert, kurz vor der Messung erst aus dem Wasserbad genommen, für 10 min an der Luft konditioniert und noch im nassen Zustand beklebt.
[c)] Die Messungen erfolgten gemäß Messmethode VIII mit der Ergänzung, dass vor der Messungen die Probe wie oben beschrieben mit UV bestrahlt wurde und die Messung nach fünf Minuten erfolgte.
[d)] Sofern keine Angaben zum Bruchbild gegeben werden, handelt es sich um ein kohäsives Versagen der Klebemasse. A = adhäsives Versagen.

Es ist anhand der Mikroscherwege zu erkennen, dass alle Haftklebemassebeispiele durch die UV-Bestrahlung vernetzt werden; im Falle der zusätzlichen Steigerung der Kohäsion durch die Verwendung von Epoxymonomeren ist die Vernetzung teilweise so stark, dass es zu adhäsivem Versagen beim dynamischen Schertest kommt. Die erfindungsgemäßen Beispiele (PSA1 und PSA9) zeigen auch nach Bestrahlung sowohl gute adhäsive Eigenschaften, die mittels Probe Tack-Messung ermittelt wurden, als auch sehr gute dynamische Scherfestigkeiten insbesondere auch auf nassem Glas. Die Vergleichsbeispiele mit dem Basispolymer VA4 (VPSA10 bis VPSA15) zeigen aufgrund des Fehlens des Silan-modifizierten Acrylatmonomers nur sehr geringe dynamische Scherfestigkeiten auf nassem Glas. Durch die Verwendung eines Silans, welches durch die kationische Vernetzung mit in das Netzwerk eingebaut werden kann (VPAS 12 und VPSA13), wird die dynamische Scherfestigkeit zwar geringfügig verbessert, jedoch waren die Eigenschaften der unvernetzten Haftklebemasse nicht gut. Die Verwendung eines polymeren, nicht an das Netzwerk gebundenen Silans zeigt eine Verschlechterung der dynamischen Scherfestigkeit auf Stahl und eine geringfügige Verbesserung auf nassem Glas, jedoch waren auch in diesen Beispielen die Eigenschaften der unvernetzten Systeme nicht zufriedenstellend. Gleiche Ergebnisse ergab der Austausch des Basispolymers. An den Vergleichsbeispielen VPSA16 bis VPSA19

ist jedoch zu erkennen, dass das Fehlen eines *N*-Vinyl-substituierten Lactams als Comonomer zu einer drastischen Minderung der Adhäsion führt. Die Beimischung weiterer Silane zur erfindungsgemäßen Haftklebemasse Ac1 führt zu einer verringerten dynamischen Scherfestigkeit.

## Patentansprüche

**1.** Zusammensetzung enthaltend oder bestehend aus:

(a1) 35 bis 90 Gew.-% wenigstens eines (Meth)Acrylsäureesters der allgemeinen Formel (I)

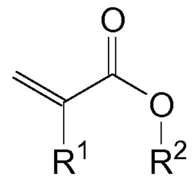

(I),

in der $R^1$ ausgewählt ist aus H und $CH_3$ und $R^2$ eine lineare oder verzweigte Alkylkette mit 1 bis 30 C-Atomen darstellt;
(a2) 5 bis 30 Gew.-% wenigstens eines olefinisch ungesättigten Monomeren mit zumindest einer kationisch polymerisierbaren funktionellen Gruppe;
(a3) 5 bis 30 Gew.-% wenigstens eines alkoxysilanmodifizierten (Meth)Acrylsäureesters;
(a4) 5 bis 30 Gew.-% wenigstens eines N-Vinyl-substituierten Lactams und
(a5) optional bis 5 Gew.-% zumindest eines von (a1) verschiedener (Meth)Acrylsäureesters und/oder wenigstens eines olefinisch ungesättigten Monomeren, das mit den Komponenten (a1) bis (a4) copolymerisierbar ist,

**wobei die Gewichtsangaben jeweils auf die Zusammensetzung bezogen sind.**

**2.** Zusammensetzung nach Anspruch 1, **dadurch gekennzeichnet, dass** diese unabhängig voneinander
45 bis 80 Gew.-%, insbesondere 45 bis 70 Gew.-% an Komponente (a1),
10 bis 25 Gew.-%, insbesondere 15 bis 25 Gew.-% an Komponente (a2),
10 bis 25 Gew.-%, insbesondere 15 bis 25 Gew.-% an Komponente (a3),
10 bis 25 Gew.-%, insbesondere 15 bis 25 Gew.-% an Komponente (a4) enthält oder hieraus besteht, **wobei die Gewichtsangaben jeweils auf die Zusammensetzung bezogen sind.**

**3.** Zusammensetzung nach Anspruch 1 oder 2, **dadurch gekennzeichnet, dass** in Formel (I) $R^2$ eine lineare oder verzweigte Alkylkette mit 1 bis 14 C-Atomen darstellt, wobei (a1) insbesondere ausgewählt ist aus Methyl(meth)acrylat, Ethyl(meth)acrylat, Propyl(meth)acrylat, n-Butyl(meth)acrylat, n-Pentyl(meth)acrylat, n-Hexyl(meth)acrylat, n-Heptylacrylat, n-Octylacrylat, n-Nonylacrylat, Laurylacrylat, Stearyl(meth)acrylat, Behenylacrylat, deren verzweigten Isomere, Cyclohexyl(meth)acrylat, Isobornyl(meth)acrylat, sowie deren Mischungen.

**4.** Zusammensetzung nach einem der vorstehenden Ansprüche, **dadurch gekennzeichnet, dass** die Komponente (a2) ausgewählt ist aus Verbindungen der Formel (II)

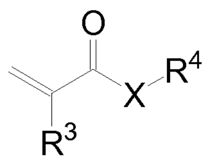

(II),

in der $R^3$ H oder $-CH_3$, X-$NR^5$- oder -O- darstellt, mit $R^5$ H oder $-CH_3$ und $R^4$ eine Epoxy-funktionalisierte (Hetero)hydrocarbylgruppe darstellt, wobei die Gruppe $R^4$ insbesondere lineare, verzweigte, cyclische oder polycyclische Kohlenwasserstoffe mit 2 bis 30 Kohlenstoffatomen darstellt, welche mit einer Epoxygruppe funktionalisiert sind, wobei die Komponente (a2) bevorzugt Epoxid- und/oder Oxetangruppen enthält, insbesondere eine 3,4-Epoxycyclohexylgruppe.

5. Zusammensetzung nach Anspruch 4, **dadurch gekennzeichnet, dass** die Komponente (a5) eine funktionelle Gruppe aufweist, die thermisch polymerisierbar ist, jedoch zu keiner thermischen kationischen Polymerisation der Epoxid- und/oder Oxetangruppen der Komponente (a2) führt, wobei die Komponente (a5) insbesondere ausgewählt ist aus Benzyl(meth)acrylat, Phenyl(meth)acrylat, *tert*-Butylphenyl(meth)acrylat, Phenoxyethyl(meth)acrlylat, 2-Butoxyethyl(meth)acrylat, *N,N*-Dimethylaminoethyl(meth)acrylat, *N,N*-Diethylaminoethyl(meth)acrylat, Tetrahydrofufurylacrylat, Hydroxyethyl(meth)acrylat, 3-Hydroxypropyl-(meth)acrylat, 4-Hydroxybutyl(meth)acrylat, 6-Hydroxyhexyl(meth)acrylat, Cyanoethyl(meth)acrylat, Allylalkohol, Acrylamid, *N-tert*-Butylacrylamid, *N*-Methylol-(meth)acrylamid, *N*-(Butoxymethyl)methacrylamid, *N*-(Ethoxymethyl)acrylamid, *N*-Isopropylacrylamid, Styrol, Methylstyrol und 3,4-Dimethoxystyrol.

6. Zusammensetzung nach einem der vorstehenden Ansprüche, **dadurch gekennzeichnet, dass** die Komponente (a3) ausgewählt ist aus 3-(Triethoxysilyl)propyl Methacrylat, 3-(Triethoxysilyl)propyl Acrylat, 3-(Trimethoxysilyl)propyl Acrylat, 3-(Trimethoxysilyl)propyl Methacrylat, Methacryloxymethyltriethoxysilan, (Methacryloxymethyl)trimethoxysilan, (3-Acryloxypropyl)methyldimethoxysilan, (Methacryloxymethyl) Methyldimethoxysilan, γ-Methacryloxypropylmethyldimethoxysilan, Methacryloxypropylmethyldiethoxysilan, 3-(dimethoxymethylsilyl)propyl methacrylat, Methyacryloxypropyldimethylethoxysilan, Methacryloxypropyldimethylmethoxysilan.

7. Zusammensetzung nach einem der vorstehenden Ansprüche, **dadurch gekennzeichnet, dass** die Komponente (a4) ausgewählt ist aus *N*-Vinylpyrrolidon, *N*-Vinylpiperidon, *N*-Vinylcaprolactam, sowie Mischungen von diesen.

8. Zusammensetzung nach einem der vorstehenden Ansprüche, **dadurch gekennzeichnet, dass** die Zusammensetzung zumindest einen kationischen Photoinitiator umfasst.

9. Verfahren zur Erzeugung einer Haftklebemasse durch Polymerisation einer Zusammensetzung nach einem der Ansprüche 1 bis 8, wobei die Zusammensetzung **nach** der Polymerisation einer strahleninduzierten Vernetzungsreaktion unterzogen wird, insbesondere einer UV-induzierten kationischen Polymerisation.

10. Haftklebemasse erhältlich durch ein Verfahren nach Anspruch 9, wobei die Haftklebemasse vor einer strahleninduzierten Vernetzungsreaktion gewichtsmittlere Molekulargewichte Mw von insbesondere 200.000 bis 20.000.000 g/mol aufweist, bevorzugt von 1.000.000 bis 15.000.000 g/mol, jeweils bestimmt über Gelpermeationschromatographie (GPC) gegen PMMA Standards.

11. Flächiges Klebeelement enthaltend oder bestehend aus einer Haftklebemasse nach Anspruch 10, wobei das Klebeelement insbesondere ausgewählt ist aus trägerlosen oder geträgerten Stanzlingen, ein- oder beidseitig mit der Haftklebemasse beschichteten ein- oder doppelseitigen geschäumten oder ungeschäumten Bändern, Bandabschnitten oder Transferklebebändern.

12. Haken, dekoratives Element, Innenspiegel im Automobil, Versteifungsprofil oder Fassadenelement, bei dem auf wenigstens einer Oberfläche eine Haftklebemasse nach Anspruch 10 und/oder ein flächiges Klebeelement nach Anspruch 11 aufgebracht ist.

13. Bauteil aus wenigstens zwei Bauelementen, die mit einer Haftklebemasse nach Anspruch 10 und/oder einem flächigen Klebeelement nach Anspruch 11 zumindest abschnittsweise verklebt sind.

14. Kit, umfassend eine Haftklebemasse nach Anspruch 10 und/oder ein flächiges Klebeelement nach Anspruch 11 sowie eine Trennvorrichtung zum Konfektionieren der Haftklebemasse oder des flächigen Klebeelements.

15. Verwendung eines alkoxysilanmodifizierten (Meth)Acrylsäureesters **in Gegenwart wenigstens eines N-Vinyl-substituierten Lactams** in (Meth)Acrylsäureester-basierten Haftklebemassen zur Verbesserung deren Haftung auf feuchten Oberflächen, vorzugsweise auf feuchten Glasoberflächen.

**Claims**

1. Composition comprising or consisting of:

(a1) 35 to 90 wt% of at least one (meth) acrylic ester of the general formula (I)

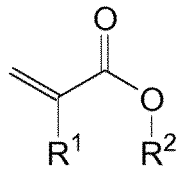

(I),

in which $R^1$ is selected from H and $CH_3$ and $R^2$ is a linear or branched alkyl chain having 1 to 30 carbons;
(a2) 5 to 30 wt% of at least one olefinically unsaturated monomer having at least one cationically polymerizable functional group;
(a3) 5 to 30 wt% of at least one alkoxysilane-modified (meth)acrylic ester;
(a4) 5 to 30 wt% of at least one N-vinyl-substituted lactam; and
(a5) optionally up to 5 wt% of at least one (meth)acrylic ester different from (a1) and/or of at least one olefinically unsaturated monomer which is copolymerizable with components (a1) to (a4),

wherein the weight indications are each based on the composition.

**2.** Composition according to Claim 1, **characterized in that** it comprises or consists of, independently of one another,
45 to 80 wt%, especially 45 to 70 wt%, of component (a1),
10 to 25 wt%, especially 15 to 25 wt%, of component (a2),
10 to 25 wt%, especially 15 to 25 wt%, of component (a3),
10 to 25 wt%, especially 15 to 25 wt%, of component (a4),
wherein the weight indications are each based on the composition.

**3.** Composition according to Claim 1 or 2, **characterized in that** in formula (I) $R^2$ is a linear or branched alkyl chain having 1 to 14 carbons, with (a1) being especially selected from methyl (meth)acrylate, ethyl (meth)acrylate, propyl (meth)acrylate, n-butyl (meth)acrylate, n-pentyl (meth)acrylate, n-hexyl (meth)acrylate, n-heptyl acrylate, n-octyl acrylate, n-nonyl acrylate, lauryl acrylate, stearyl (meth)acrylate, behenyl acrylate, branched isomers thereof, cyclohexyl (meth)acrylate, isobornyl (meth)acrylate, and mixtures thereof.

**4.** Composition according to any of the preceding claims, **characterized in that** component (a2) is selected from compounds of the formula (II)

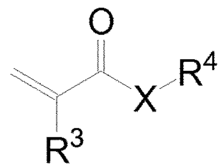

(II),

in which $R^3$ is H or $-CH_3$, X is $-NR^5-$ or -O-, where $R^5$ is H or $-CH_3$, and $R^4$ is an epoxy-functionalized (hetero)hydrocarbyl group, the group $R^4$ especially being linear, branched, cyclic or polycyclic hydrocarbons having 2 to 30 carbon atoms that are functionalized with an epoxy group, with component (a2) preferably comprising epoxide groups and/or oxetane groups, especially a 3,4-epoxycyclohexyl group.

**5.** Composition according to Claim 4, **characterized in that** component (a5) has a functional group which is thermally polymerizable but does not lead to thermal cationic polymerization of the epoxide groups and/or oxetane groups of component (a2), with component (a5) being especially selected from benzyl (meth)acrylate, phenyl (meth)acrylate, *tert*-butylphenyl (meth)acrylate, phenoxyethyl (meth)acrylate, 2-butoxyethyl (meth)acrylate, *N,N*-dimethylaminoethyl (meth)acrylate, *N,N*-diethylaminoethyl (meth)acrylate, tetrahydrofurfuryl acrylate, hydroxyethyl (meth)acrylate, 3-hydroxypropyl (meth)acrylate, 4-hydroxybutyl (meth)acrylate, 6-hydroxyhexyl (meth)acrylate, cyanoethyl (meth)acrylate, allyl alcohol, acrylamide, *N-tert*-butylacrylamide, *N*-methylol(meth)acrylamide, *N*-(butoxymethyl)methacrylamide, *N*-(ethoxymethyl)acrylamide, *N*-isopropylacrylamide, styrene, methylstyrene, and 3,4-dimethoxystyrene.

**6.** Composition according to any of the preceding claims, **characterized in that** component (a3) is selected from 3-(triethoxysilyl)propyl methacrylate, 3-(triethoxysilyl)propyl acrylate, 3-(trimethoxysilyl)propyl acrylate, 3-(trimethoxysilyl)propyl methacrylate, methacryloyloxymethyltriethoxysilane, (methacryloyloxymethyl)trimethoxysilane, (3-acryloyloxypropyl)methyl- dimethoxysilane, (methacryloyloxymethyl)methyldimethoxysilane, γ-methacryloyl-oxypropylmethyldimethoxysilane, methacryloyloxypropylmethyldiethoxysilane, 3-(dimethoxymethylsilyl)propyl methacrylate, methacryloyloxypropyldimethylethoxysilane, methacryloyloxypropyldimethylmethoxysilane.

**7.** Composition according to any of the preceding claims, **characterized in that** component (a4) is selected from *N*-vinylpyrrolidone, *N*-vinylpiperidone, *N*-vinylcaprolactam, and mixtures of these.

**8.** Composition according to any of the preceding claims, **characterized in that** the composition comprises at least one cationic photoinitiator.

**9.** Method for producing a pressure sensitive adhesive by polymerization of a composition according to any of Claims 1 to 8, wherein the composition, after the polymerization, is subjected to a radiation-induced crosslinking reaction, more particularly to a UV-induced cationic polymerization.

**10.** Pressure sensitive adhesive obtainable by a method according to Claim 9, wherein the pressure sensitive adhesive, before a radiation-induced crosslinking reaction, has weight-average molecular weights Mw of especially 200 000 to 20 000 000 g/mol, preferably of 1 000 000 to 15 000 000 g/mol, determined in each case via gel permeation chromatography (GPC) against PMMA standards.

**11.** Sheetlike bonding element comprising or consisting of a pressure sensitive adhesive according to Claim 10, wherein the bonding element is especially selected from diecuts with or without carrier, single-sided or double-sided, foamed or unfoamed tapes, tape sections, or adhesive transfer tapes, coated on one or both sides with the pressure sensitive adhesive.

**12.** Hook, decorative element, interior automobile mirror, stiffening profile, or architectural facing element at least one surface of which bears an applied pressure sensitive adhesive according to Claim 10 and/or an applied sheetlike bonding element according to Claim 11.

**13.** Component comprising at least two construction elements bonded at least in sections with a pressure sensitive adhesive according to Claim 10 and/or with a sheetlike bonding element according to Claim 11.

**14.** Kit comprising a pressure sensitive adhesive according to Claim 10 and/or a sheetlike bonding element according to Claim 11 and also a separating means for end-use processing the pressure sensitive adhesive or the sheetlike bonding element.

**15.** Use of an alkoxysilane-modified (meth)acrylic ester in the presence of at least one N-vinyl-substituted lactam in (meth)acrylic ester-based pressure sensitive adhesives for improving their adhesion to damp surfaces, preferably to damp glass surfaces.

## Revendications

**1.** Composition contenant ou constituée par :

(a1) 35 à 90 % en poids d'au moins un ester de l'acide (méth)acrylique de la formule générale (I) :

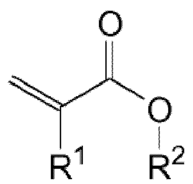

(I),

dans laquelle $R^1$ est choisi parmi H et $CH_3$, et $R^2$ représente une chaîne alkyle linéaire ou ramifiée de 1 à 30 atomes C ;

(a2) 5 à 30 % en poids d'au moins un monomère oléfiniquement insaturé contenant au moins un groupe fonctionnel polymérisable par voie cationique ;

(a3) 5 à 30 % en poids d'au moins un ester de l'acide (méth)acrylique modifié par un alcoxysilane ;
(a4) 5 à 30 % en poids d'au moins un lactame à substitution N-vinyle, et
(a5) éventuellement jusqu'à 5 % en poids d'au moins un ester de l'acide (méth)acrylique différent de (a1) et/ou d'au moins un monomère oléfiniquement insaturé, qui est copolymérisable avec les composants (a1) à (a4),

les données en poids se rapportant à chaque fois à la composition.

**2.** Composition selon la revendication 1, **caractérisée en ce que** celle-ci contient indépendamment les uns des autres :

45 à 80 % en poids, notamment 45 à 70 % en poids, de composant (a1),
10 à 25 % en poids, notamment 15 à 25 % en poids, de composant (a2),
10 à 25 % en poids, notamment 15 à 25 % en poids, de composant (a3),
10 à 25 % en poids, notamment 15 à 25 % en poids, de composant (a4),

ou en est constituée, les données en poids se rapportant à chaque fois à la composition.

**3.** Composition selon la revendication 1 ou 2, **caractérisée en ce que**, dans la formule (I), $R^2$ représente une chaîne alkyle linéaire ou ramifiée de 1 à 14 atomes C, (a1) étant notamment choisi parmi le (méth)acrylate de méthyle, le (méth)acrylate d'éthyle, le (méth)acrylate de propyle, le (méth)acrylate de n-butyle, le (méth)acrylate de n-pentyle, le (méth)acrylate de n-hexyle, l'acrylate de n-heptyle, l'acrylate de n-octyle, l'acrylate de n-nonyle, l'acrylate de lauryle, le (méth)acrylate de stéaryle, l'acrylate de béhényle, leurs isomères ramifiés, le (méth)acrylate de cyclohexyle, le (méth)acrylate d'isobornyle, ainsi que leurs mélanges.

**4.** Composition selon l'une quelconque des revendications précédentes, **caractérisée en ce que** le composant (a2) est choisi parmi les composés de la formule (II) :

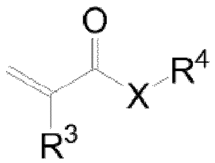
(II),

dans laquelle $R^3$ représente H ou $-CH_3$, X représente $-NR^5-$ ou -O-, avec $R^5$ représentant H ou $-CH_3$ et $R^4$ représentant un groupe (hétéro)hydrocarbyle à fonctionnalisation époxy, le groupe $R^4$ représentant notamment des hydrocarbures linéaires, ramifiés, cycliques ou polycycliques de 2 à 30 atomes de carbone, qui sont fonctionnalisés avec un groupe époxy, le composant (a2) contenant de préférence des groupes époxyde et/ou oxétane, notamment un groupe 3,4-époxycyclohexyle.

**5.** Composition selon la revendication 4, **caractérisée en ce que** le composant (a5) comprend un groupe fonctionnel qui est polymérisable thermiquement, mais qui ne conduit toutefois pas à une polymérisation cationique thermique des groupes époxyde et/ou oxétane du composant (a2), le composant (a5) étant notamment choisi parmi le (méth)acrylate de benzyle, le (méth)acrylate de phényle, le (méth)acrylate de *tert*-butylphényle, le (méth)acrylate de phénoxyéthyle, le (méth)acrylate de 2-butoxyéthyle, le (méth)acrylate de *N,N*-diméthylaminoéthyle, le (méth)acrylate de *N,N*-diéthylaminoéthyle, l'acrylate de tétrahydrofurfuryle, le (méth)acrylate d'hydroxyéthyle, le (méth)acrylate de 3-hydroxypropyle, le (méth)acrylate de 4-hydroxybutyle, le (méth)acrylate de 6-hydroxyhexyle, le (méth)acrylate de cyanoéthyle, l'alcool allylique, l'acrylamide, le *N-tert*-butylacrylamide, le *N*-méthylol-(méth)acrylamide, le *N*-(butoxyméthyl)méthacrylamide, le *N*-(éthoxyméthyl)acrylamide, le *N*-isopropylacrylamide, le styrène, le méthylstyrène et le 3,4-diméthoxystyrène.

**6.** Composition selon l'une quelconque des revendications précédentes, **caractérisée en ce que** le composant (a3) est choisi parmi le méthacrylate de 3-(triéthoxysilyl)propyle, l'acrylate de 3-(triéthoxysilyl)propyle, l'acrylate de 3-(triméthoxysilyl)propyle, le méthacrylate de 3-(triméthoxysilyl)propyle, le méthacryloxyméthyltriéthoxysilane, le (méthacryloxyméthyl)triméthoxysilane, le (3-acryloxypropyl)méthyldiméthoxysilane, le (méthacryloxyméthyl)méthyldiméthoxysilane, le γ-méthacryloxypropylméthyldiméthoxysilane, le méthacryloxypropylméthyldiéthoxysilane, le méthacrylate de 3-(diméthoxyméthylsilyl)propyle, le méthacryloxypropyldiméthyléthoxysilane, le méthacryloxypropyldiméthylméthoxysilane.

7. Composition selon l'une quelconque des revendications précédentes, **caractérisée en ce que** le composant (a4) est choisi parmi la *N*-vinylpyrrolidone, la *N*-vinylpipéridone, le *N*-vinylcaprolactame, ainsi que les mélanges de ceux-ci.

8. Composition selon l'une quelconque des revendications précédentes, **caractérisée en ce que** la composition comprend au moins un photoinitiateur cationique.

9. Procédé pour la formation d'un matériau adhésif sensible à la pression par polymérisation d'une composition selon l'une quelconque des revendications 1 à 8, dans lequel la composition est soumise à une réaction de réticulation induite par un rayonnement après la polymérisation, notamment à une polymérisation cationique induite par UV.

10. Matériau adhésif sensible à la pression pouvant être obtenu par un procédé selon la revendication 9, dans lequel le matériau adhésif sensible à la pression présente avant une réaction de réticulation induite par un rayonnement des poids moléculaires moyens en poids Mw de notamment 200 000 à 20 000 000 g/mol, de préférence de 1 000 000 à 15 000 000 g/mol, à chaque fois déterminés par chromatographie par perméation de gel (CPG) contre des étalons de PMMA.

11. Élément adhésif plat contenant ou constitué par un matériau adhésif sensible à la pression selon la revendication 10, dans lequel l'élément adhésif est notamment choisi parmi les articles découpés sans support ou supportés, les bandes, sections de bandes ou bandes adhésives de transfert moussées ou non moussées simple ou double face, revêtues sur un ou les deux côtés avec le matériau adhésif sensible à la pression.

12. Crochet, élément décoratif, rétroviseur intérieur d'automobile, profilé de renfort ou élément de façade, dans lequel un matériau adhésif sensible à la pression selon la revendication 10 et/ou un élément adhésif plat selon la revendication 11 est appliqué sur au moins une surface.

13. Composant constitué par au moins deux éléments, qui sont collés au moins en sections avec un matériau adhésif sensible à la pression selon la revendication 10 et/ou un élément adhésif plat selon la revendication 11.

14. Kit, comprenant un matériau adhésif sensible à la pression selon la revendication 10 et/ou un élément adhésif plat selon la revendication 11, ainsi qu'un dispositif de séparation pour le conditionnement du matériau adhésif sensible à la pression ou de l'élément adhésif plat.

15. Utilisation d'un ester de l'acide (méth)acrylique à modification alcoxysilane en présence d'au moins un lactame à substitution N-vinyle dans des matériaux adhésifs sensibles à la pression à base d'un ester de l'acide (méth)acrylique pour améliorer leur adhésion sur des surfaces humides, de préférence des surfaces en verre humides.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0621931 B1
- WO 2004060946 A
- WO 2012061032 A
- EP 1658319 B1
- EP 2160443 B1
- EP 1456321 B1
- DE 102004031188 A1
- DE 10361540 A1
- WO 2012177337 A1
- US 20140303274 A
- WO 2013103334 A1
- US 6140445 A
- WO 2001053385 A1
- WO 2013096272 A1
- EP 1394199 B1
- WO 9624620 A1
- WO 9844008 A1
- DE 19949352 A1
- US 5945491 A
- US 5854364 A
- US 5789487 A
- WO 9801478 A1
- WO 9931144 A1


### In der Beschreibung aufgeführte Nicht-Patentliteratur


- *CHEMICAL ABSTRACTS,* 21142-29-0
- *CHEMICAL ABSTRACTS,* 20208-39-3
- *CHEMICAL ABSTRACTS,* 4369-14-6
- *CHEMICAL ABSTRACTS,* 2530-85-0
- *CHEMICAL ABSTRACTS,* 5577-72-0
- *CHEMICAL ABSTRACTS,* 54586-78-6
- *CHEMICAL ABSTRACTS,* 13732-00-8
- *CHEMICAL ABSTRACTS,* 121177-93-3
- *CHEMICAL ABSTRACTS,* 3978-58-3
- *CHEMICAL ABSTRACTS,* 65100-04-1
- *CHEMICAL ABSTRACTS,* 14513-34-9
- *CHEMICAL ABSTRACTS,* 13731-98-1
- *CHEMICAL ABSTRACTS,* 66753-64-8
- **VON DONATAS SATAS.** Handbook of Pressure Sensitive Adhesive Technology. van Nostrand, 1989
- **T.G. FOX.** *Bull. Am. Phys. Soc.,* 1956, vol. 1, 123
- *Houben-Weyl, Methoden der Organischen Chemie,* vol. E 19a, 60-147
- *Macromolecules,* 2000, vol. 33, 243-245
- *CHEMICAL ABSTRACTS,* 139198-19-9
- **J.V. CRIVELLO ; R. NARAYAN.** *Chem. Mater.,* 1992, vol. 4, 692
- *Polymer,* 1967, vol. 8, 381 ff
- *CHEMICAL ABSTRACTS,* 15520-11-3, 13472-08-7, 82428-30-6, 2530-85-0, 65100-04-1, 2602-34-8, 75009-88-0, 2386-87-0